(19) Europäisches Patentamt
European Patent Office
Office européen des brevets

(11) EP 4 458 876 A1

# (12) EUROPÄISCHE PATENTANMELDUNG

(43) Veröffentlichungstag:
**06.11.2024 Patentblatt 2024/45**

(21) Anmeldenummer: **23171532.7**

(22) Anmeldetag: **04.05.2023**

(51) Internationale Patentklassifikation (IPC):
***C08G 18/28*** *(2006.01)* ***C08G 18/32*** *(2006.01)*
***C08G 18/73*** *(2006.01)* ***B29C 64/00*** *(2017.01)*

(52) Gemeinsame Patentklassifikation (CPC):
**C08G 18/73; B33Y 70/00; C08G 18/2825; C08G 18/3206;** C08G 2140/00

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
- **Hocke, Heiko**
  **51375 Leverkusen (DE)**
- **Muenchrath, Rene**
  **51061 Köln (DE)**
- **Peerenboom, Simon**
  **47495 Rheinberg (DE)**

(74) Vertreter: **Levpat**
**c/o Covestro AG**
**Gebäude K12**
**51365 Leverkusen (DE)**

## (54) VERFAHREN ZUR HERSTELLUNG EINES THERMOPLASTISCHEN POLYURETHAN-PULVERS MITTELS FÄLLUNGSPOLYMERISATION

(57) Die Erfindung betrifft ein Verfahren zur Herstellung eines thermoplastischen Polyurethan-Pulvers mittels Fällungspolymerisation, umfassend die Schritte:
i. Bereitstellung
A) eines Lösungsmittelgemisches, umfassend mindestens ein erstes aprotisches Lösungsmittel A1) mit einer relativen Permittivität $\varepsilon_r$ von 3 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und 100 kHz gemessen wird;
B) wenigstens eines Polyols mit einer Molmasse zwischen 60 g/mol und 250 g/ mol;
C) wenigstens eines Diisocyanats;
D) optional eines Katalysators;
E) optional eines Kettenregulators E1) und/oder eines Additivs E2);

ii. Umsetzung des Polyols B) mit dem Diisocyanat C) in dem Lösungsmittelgemisch A) bei einer Temperatur von höchstens 150 °C, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittelgemisch A) ausfällt und eine Dispersion bildet;
iii. Abtrennung von dem Lösungsmittelgemisch und optionale Waschung des thermoplastischen Polyurethans mit einem Lösungsmittel; und
iv. Trocknung des thermoplastischen Polyurethans zu dem thermoplastischen Polyurethan-Pulver;
wobei das thermoplastische Polyurethan-Pulver ein Massenmittel der Molmasse Mw von > 35000 g/mol; einen Allophanatgehalt von < 0,25 mol-%, bezogen auf das gesamte thermoplastische Polyurethan-Pulver; und > 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von < 4,0 aufweist, wobei das Massenmittel der Molmasse Mw, der Allophanatgehalt, die Partikelfraktion sowie das Zentrifugenmittel der Molmasse Mz jeweils mit den in der Beschreibung dargelegten Methoden bestimmt werden.



Processed by Luminess, 75001 PARIS (FR)

## Beschreibung

Die vorliegende Erfindung betrifft ein Verfahren zur Herstellung eines thermoplastischen Polyurethan-Pulvers mittels Fällungspolymerisation, das durch dieses Verfahren erhaltene oder erhältliche thermoplastische Polyurethan-Pulver sowie dessen Verwendung. Darüber hinaus betrifft die Erfindung ein Formteil, erhalten oder erhältlich durch die Verarbeitung des erfindungsgemäßen thermoplastischen Polyurethan-Pulvers.

Stand der Technik

Die Herstellung von Polymerpulvern ist für die Verwendung in Pulversinterverfahren, als Additiv für strukturierte Oberflächen oder als Schleif- und Schmiermittel in Kosmetikanwendungen und in der Industrie von hohem Interesse. Pulversinterverfahren sind insbesondere Verfahren, bei denen zunächst eine Pulverschicht appliziert wird, die in einem weiteren Schritt zusammengesintert bzw. die Pulverpartikel miteinander verschmolzen werden. Solche Verfahren werden z.B. zur Beschichtung von Metallen, Polymeren, Holz, Fasern und anderen Materialien genutzt, wo die Oberfläche mittels Dipping in Wirbelbett, mittels Spray-Gun oder via einer Dispersion mit Pulver imprägniert und anschließend erhitzt wird. Neben Epoxid- und Polyesterharzen werden dafür auch unterschiedlichste thermoplastische Polymere wie z.B. Polypropylen, Polyamide, PVC, Acrylate und Polyurethane benutzt.

Ein Prozess zur Herstellung von thermoplastischen Polyurethanen ("TPU") wurde bereits 1937 in DE728981C beschrieben. Die TPU, unter denen insbesondere ein HDI-BDO Addukt (HDI = 1,6-Hexamethylendiisocyanat; BDO = 1,4-Butandiol) auf Grund seiner Kombination guter Eigenschaften wie hoher Schmelzpunkt, hoher E-Modul und gute Chemikalienbeständigkeit später unter den Namen Perlon U, Igamid U und Durethan U eine Zeit lang vermarktet wurde (O. Bayer Angew. Chem. 1947, 59, 9, 257-288), werden dabei durch Umsetzung in einem Lösungsmittel (wie z.B. Chlorbenzen und Dioxan) hergestellt. Das Lösemittel wird in der Regel im Vakuum entfernt. In einigen Beispielen fielen die TPU auch als Gel oder Pulver aus. Es hat sich jedoch später gezeigt, dass die erreichten molekularen Kettenlängen zum Teil ungenügend waren, um gute Polymereigenschaften zu erhalten. Höhermolekulare TPU-Pulver auf Basis z.B. BDO-HDI sind so daher nicht zugänglich.

Jedoch werden die meisten Polymere wie Polypropylen, Polyamid oder thermoplastische Polyurethane, die z.B. für Pulverbeschichtungen oder Pulversinterverfahren verwendet werden können, in Form einer Schmelze hergestellt. Das so erhaltene Polymer muss in einem weiteren Prozessschritt, z.B. durch Mahlung, in die Pulverform gebracht werden. Bei der Herstellung von beispielsweise aliphatischen thermoplastischen Polyurethanen in der Schmelze werden die reinen Monomere wie zum Beispiel 1,4-Butandiol (BDO) und 1,6-Hexamethylendiisocyanat (HDI) in einem Kessel zu einem OH-terminierten Prepolymer umgesetzt. Die zweite Stufe der Umsetzung wird dann in einem schweren Mischaggregat (heavy duty mixer) durch Zugabe von HDI (im Unterschuss; Kennzahl KZ ca. 0,98) zu dem Prepolymer zum Endprodukt durchgeführt (B.I.O.S. Final Report No. 1472, ITEM No. 22, pp47-48). Die Nachteile des Prozesses liegen unter anderem in der hohen Reaktionstemperatur und dem langen sowie schlechten Mischprozess, was zu einem Anwachsen unerwünschter Nebenreaktionen führt. Dieser Schmelzeprozess kann auch in abgewandelter Form erfolgen. Dabei werden die Monomere BDO und HDI in einem Loop Reaktor beziehungsweise alternativ in statischen Mischern (Fluitec Reaktoren) zum Prepolymer umgesetzt, welches in einem 2. Reaktionsschritt in einer Reaktivextrusion mit HDI zum finalen Polymer weiterreagiert. Die Nachteile eines relativ hohen Allophanatanteils und das Auftreten von Gelpartikeln können allerdings auch bei einer Begrenzung des Umsatzes (Unterschuß HDI, KZ 0,98) nicht vermieden werden (WO2021122279). Bei den hier als Beispiel beschriebenen Schmelzeprozessen fällt das Polymer in Form eines Granulates nach der Reaktivextrusion an und muss in einem weiteren Prozessschritt noch in die Pulverform überführt werden.

Bei den meisten Polymeren wie Polyamiden (beispielsweise in EP3491066A1 gezeigt), Polypropylen und den ebenfalls häufig genutzten thermoplastischen Polyurethanen (siehe EP3512687B1) wird für die Umarbeitung des Granulates zu einem Pulver die Mahlung, insbesondere die Kryomahlung, verwendet. Bei der Kryomahlung wird das Polymergranulat mit flüssigem Stickstoff stark abgekühlt und anschließend gemahlen. Die gewünschte Korngröße wird durch Siebung aus dem Mahlgut abgetrennt. Der Nachteil von Mahlverfahren generell ist, dass die Partikelform nicht sphärisch, sondern sehr unregelmäßig und kantig ist. Dadurch wird das Fließverhalten negativ beeinflusst und die Siebung des Mahlgutes ist aufwendiger. Zudem ist die Partikelgrößenverteilung bei der Mahlung sehr breit, so dass die Ausbeute klein ist beziehungsweise der Mahl- und Siebvorgang mehrfach wiederholt werden muss. Zudem ist die Kryomahlung auf Grund des Einsatzes von flüssigen Stickstoff zur ausreichenden Kühlung der Polymere ein teures Verfahren.

Ein Sonderfall stellt das Polyamid 12 (beziehungsweise Polyamid 11) dar, welches zunächst als PA 12 Granulat hergestellt und unter Druck in Ethanol bei erhöhter Temperatur aufgelöst und anschließend unter sehr exakt kontrollierten Bedingungen wieder ausgefällt und getrocknet (siehe beispielsweise EP0911142B1) wird. Der Vorteil dieser Methode ist, dass das Polymerpulver als relativ sphärische Partikel anfällt, die zudem eine Partikelgröße von < 100 $\mu$m (rieselfähig) aufweisen und nicht klassiert (gesiebt) werden müssen. Nachteile des Verfahrens sind neben zusätzlichen Arbeitsschritten und Anlagen die damit verbundenen Kosten sowie keine oder nur eine begrenzte Additivierung des Polymers.

Die vorgenannten Verfahren sind auf Grund ihres Aufwandes teuer und/oder ihrer Nachteile für die Herstellung

von thermoplastischen Polyurethan-Pulvern mit langen Kettenlängen in Kombination mit geringen Allophanatgehalt nicht geeignet und limitieren daher den Einsatz von thermoplastischen Polyurethan-Pulvern beziehungsweise die darauf angewiesenen Verfahren (Pulversinterprozesse; Füllstoff für Oberflächenstrukturierung) in der Industrie.

Es besteht daher ein Bedarf an einem Verfahren zur Herstellung von thermoplastischen Polyurethan-Pulvern mit hohen Molmassen und geringen Allophanatgehalten.

## Aufgabe der Erfindung

Die Aufgabe der vorliegenden Erfindung bestand demnach in der Bereitstellung eines Verfahrens zur Herstellung von thermoplastischen Polyurethan-Pulvern mit hohen Molmassen und geringen Allophanatgehalten. Im Besonderen sollte das Verfahren zu thermoplastischen Polyurethan-Pulvern mit einem Massenmittel der Molmasse von > 35000 g/mol und einem Allophanatgehalt von < 0,25 mol-%, bezogen auf das gesamte thermoplastische Polyurethan-Pulver, führen. Außerdem sollten die thermoplastischen Polyurethan-Pulver durch Weiterverarbeitung zu Formteilen führen, welche möglichst frei von Gelpartikeln sind und/oder weiterhin gute mechanische Eigenschaften, insbesondere eine gute Bruchdehnung und ein gutes E-Modul , aufweisen.

## Lösung der Aufgabe und detaillierte Beschreibung der Erfindung

Die Aufgabe wurde gelöst durch ein Verfahren zur Herstellung eines thermoplastischen Polyurethan-Pulvers mittels Fällungspolymerisation, umfassend die Schritte:

i. Bereitstellung

A) eines Lösungsmittelgemisches, umfassend mindestens ein erstes aprotisches Lösungsmittel A1) mit einer relativen Permittivität $\varepsilon_r$ von 3 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und 100 kHz gemessen wird;
B) wenigstens eines Polyols mit einer Molmasse zwischen 60 g/mol und 250 g/ mol;
C) wenigstens eines Diisocyanats;
D) optional eines Katalysators;
E) optional eines Kettenregulators E1) und/oder eines Additivs E2);

ii. Umsetzung des Polyols B) mit dem Diisocyanat C) in dem Lösungsmittelgemisch A) bei einer Temperatur von höchstens 150 °C, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittelgemisch A) ausfällt und eine Dispersion bildet;
iii. Abtrennung von dem Lösungsmittelgemisch und optionale Waschung des thermoplastischen Polyurethans mit einem Lösungsmittel; und
iv. Trocknung des thermoplastischen Polyurethans zu dem thermoplastischen Polyurethan-Pulver;

wobei das thermoplastische Polyurethan-Pulver

- ein Massenmittel der Molmasse Mw von > 35000 g/mol;
- einen Allophanatgehalt von < 0,25 mol-%, bezogen auf das gesamte thermoplastische Polyurethan-Pulver; und
- > 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von < 4,0;

aufweist, wobei das Massenmittel der Molmasse Mw, der Allophanatgehalt, die Partikelfraktion sowie das Zentrifugenmittel der Molmasse Mz jeweils mit den weiter unten dargelegten Methoden bestimmt werden.

Im Zuge der Entwicklungsarbeiten, die zu der vorliegenden Erfindung geführt haben, wurde überraschenderweise festgestellt, dass die Verwendung eines speziellen Lösungsmittelgemisches, nämlich umfassend mindestens ein erstes aprotisches Lösungsmittel A1) mit einer relativen Permittivität $\varepsilon_r$ von 3 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und 100 kHz gemessen wird, bei einer Fällungspolymerisation zu thermoplastischen Polyurethan-Pulvern mit hohen Molmassen und geringen Allophanatgehalten führt.

Das Zahlenmittel der Molmasse (Mn), das Massenmittel der Molmasse (Mw) sowie das Zentrifugenmittel (Mz)

des thermoplastischen Polyurethanpulvers wird mittels Gelpermeationschromatographie (GPC) bestimmt. Dazu wird die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wird mit folgenden Komponenten bei einer Flussrate von 1 Kubikzentimeter/Minute gemessen:

Pumpe: HPLC-Pumpe 515 (Waters GmbH)
Detektor: Smartline RI-Detektor 2300 (Knauer Wissenschaftliche Geräte GmbH)
Säulen: 1 Vorsäule, 1000 Å PSS PFG 7μm, 300 Å PSS PFG 7μm, 100 Å PSS PFG 7μm in dieser Reihenfolge (PSS Polymer Standards Service GmbH) Entgasung: Degasser PSS (PSS Polymer Standards Service GmbH)
Injektionsvolumen: 100 Mikroliter
Temperatur: 23°C - 25 °C
Molmassen-Standard: Polymethylmethacrylat-Standard-Kit (PSS Polymer Standards Service GmbH)

Das Zahlenmittel der Molmasse (Mn bzw. $\overline{M}_n$) wird aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i}$$

in g/mol
wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Massenmittel der Molmasse (Mw bzw. $\overline{M}_w$) wird ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i}$$

in g/mol
wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Das Zentrifugenmittel der Molmasse (Mz bzw. $\overline{M}_z$) wird aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2}$$

in g/mol
wobei:

$M_i$ die molare Masse der Polymere der Fraktion $i$ ist, so dass $M_i < M_{i+1}$ für alle $i$, in g/mol ist,
$n_i$ die Stoffmenge des Polymers der Fraktion $i$, in mol ist.

Der Allophanatgehalt des thermoplastischen Polyurethanpulvers wird mittels $^1$H-NMR bestimmt. Die Messungen wird mit einem Bruker AV III HD 600 Spektrometer bei 600 MHz in DMSO-D6 bei 80 °C durchgeführt. Folgende Peaks werden dabei ausgewertet:

U= $CH_2$-NH 2.98 ppm $CH_2$ bei Urethan

(fortgesetzt)

| | | | |
|---|---|---|---|
| O= | $CH_2$-OH | 3.43 ppm | $CH_2$ bei OH-Gruppen |
| N= | N-H | 6.6 ppm | Urethan |
| A= | N-H | 8.3-8.4 ppm | Allophanat |

Die Allophanat Konzentration beziehungsweise der Allophanatgehalt in mol-% wird dabei nach folgender Formel berechnet:

$$\text{Allophanat [mol-\%]} = 100\ \% * A/\ (A+N)$$

Die Kennzahl für den Umsatz ergibt sich aus der Formel:

$$KZ = 1/\ (1+O/U)$$

Für die Bestimmung der Partikelfraktion wird ca. 100 g Probenmenge 5 min mit einer Haver & Boecker Laborsiebmaschine Nr. 7279 (Bj. 1978) und dem entsprechenden Siebsatz (z.B. 0,100 mm, 0,250 mm, 0,500 mm) gesiebt und die einzelnen Fraktionen danach gewogen.

Die Zugprüfung (zur Bestimmung der Bruchdehnung und des E-Moduls) wird im Rahmen der Erfindung in Anlehnung an die Prüfmethode DIN EN ISO 527 mit Probekörpern Typ 5A (DIN EN ISO 527-2, Dicke 2 mm) durchgeführt. Die Probekörper werden vor dem Versuch mindestens 24 h bei Normbedingungen gelagert. Die Zugversuche erfolgen bei 22 °C und 50 % relativer Feuchte, durchgeführt mit einer Universalprüfmaschine Z010 der Fa. Zwick mit einer Geschwindigkeit von 10 mm/ min. Der E-Modul wird zwischen 0,05 % und 0,25 % Dehnung ermittelt mittels Sekante.

Es ist bevorzugt, dass das erste aprotische Lösungsmittel A1) halogenierte Aromaten, Ketone, Ether, Ester und Carbonate oder Mischungen davon, insbesondere Chlorbenzol und/oder ortho-Dichlorbenzol; Cyclopentanon; Cyclohexanon; Heptan-4-on; Acetophenon oder Mischungen davon, weiter bevorzugt Chlorbenzol und/oder das zweite aprotisch polare Lösungsmittel A2) Dimethylsulfoxid, Dimethylformamid, N-Methyl-2-pyrrolidon, Tetramethylharnstoff (TMU), 1,3-Dimethyl-3,4,5,6-tetrahydro-2(1H)-pyrimidinion, 1,3-Dimethyl-2-imidazolidinon, N-Ethyl-2-pyrrolidon, Benzonitril, Dimethylacetamid oder Mischungen davon, bevorzugt Dimethylsulfoxid umfasst oder daraus besteht.

Das Verhältnis von dem ersten aprotischen Lösungsmittel A1) zu dem zweiten aprotisch polaren Lösungsmittel A2) beträgt bevorzugt 300:1 bis 1:9, weiter bevorzugt 200:1 bis 1:1, noch weiter bevorzugt 100:1 bis 8:2.

Ferner ist es bevorzugt, dass das Polyol B) Ethylenglykol, 1,3-Propandiol, 1,4-Butandiol, 1,5-Pentandiol, Neopentylglykol, 1,6-Hexandiol, 1,8-Octandiol, 1,10-Decandiol, 1,12-Dodecandiol oder Mischungen davon umfasst oder daraus besteht, wobei das Polyol B) vorzugsweise mindestens 50,0 Gew.-% 1,4-Butandiol, besonders bevorzugt mindestens 90,0 Gew.-% 1,4-Butandiol enthält, bezogen auf das Gesamtgewicht des Polyols B).

Das Diisocyanat umfasst bevorzugt oder besteht bevorzugt aus 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat oder Mischungen von diesen, wobei das Diisocyanat C) weiter bevorzugt mindestens 50,0 Gew.-% 1,5-Pentandiisocyanat oder 1,6-Hexandiisocyanat enthält, bezogen auf das Gesamtgewicht des Diisocyanats C).

Der optionale Katalysator D) kann beispielsweise aus typischen Urethanisierungskatalysatoren wie sie beispielweise in Becker / Braun, Kunststoffhandbuch Band 7, Polyurethane, Kapitel 3.4 angegeben werden oder Mischungen davon ausgewählt sein.

Der optionale Kettenregulator E1) kann beispielsweise aus der Gruppe, umfassend oder bestehend aus monofunktionalen Zerewitinow H-aciden Verbindungen, monofunktionalen Isocyanaten oder Mischungen davon ausgewählt sein. Als Beispiele für den optionalen Kettenregulator E1) sind unter anderem n-Octanol, Benzylalkohol, n-Oktylamin, Dioktylamin, ε-Caprolactam, Propanonoxim, Butan-1-thiol, Acetylaceton und Malonsäurediethylester zu nennen.

Das optionale Additiv E2) kann zum Beispiel aus der Gruppe ausgewählt sein, umfassend oder bestehend aus Stabilisatoren, Farbstoffen und Markern oder Mischungen davon.

Unter Farbstoffen werden hier organische Verbindungen verstanden, die mindestens Teile des sichtbaren Lichtes zwischen 380 nm und 790 nm absorbieren. Besonders bevorzugt sind Farbstoffe, die unter den in Schritt ii. genannten Reaktionsbedingungen gelöst vorliegen und mit einer Zerewitinow H-aciden Verbindung oder mit einer Isocyanatgruppe reagieren und so kovalent mit dem thermoplastischen Polyurethan verbunden sind.

Unter Markern werden hier Verbindungen verstanden, die mit Hilfe von analytischen Verfahren einfach zu detektieren und spezifisch sind. Dies können zum Beispiel aromatische Verbindungen sein, welche eine spezifische

UV-Absorption oder UV-Absorptionsmuster aufweisen, oder mittels Fluoreszenzspektroskopie nachgewiesen werden können. Weitere Beispiele für Marker sind Isotopen-angereicherte Verbindungen, die sich gut mittels NMR-Spektroskopie oder durch ihre radioaktive Strahlung nachweisen lassen. Besonders bevorzugt sind Marker, die unter den in Schritt ii. genannten Reaktionsbedingungen gelöst vorliegen und mit einer Zerewitinow H-aciden Verbindung oder mit einer Isocyanatgruppe reagieren und so kovalent mit dem thermoplastischen Polyurethan verbunden sind.

Des Weiteren ist es bevorzugt, dass

- 30,0 bis 95,0 Gew.-%, bevorzugt 60,0 bis 90,0 Gew.-% des Lösungsmittelgemischs A);
- 2,0 bis 40,0 Gew.-%, bevorzugt 3,0 bis 20,0 Gew.-% des Polyols B);
- 3,0 bis 40,0 Gew.-%, bevorzugt 5,0 bis 25,0 Gew.-% des Diisocyanats C);
- 0 bis 5,0 Gew.-%, bevorzugt 0 bis 0,1 Gew.-% des Katalysators D);
- 0 bis 10,0 Gew.-%, bevorzugt 0,001 bis 1,5 Gew.-% des Kettenregulators E1);
- 0 bis 20,0 Gew.-%, bevorzugt 0,0001 bis 3,0 Gew.-% des Additivs E2);

bereitgestellt werden, jeweils bezogen auf die Gesamtmenge von Lösungsmittelgemisch A), Polyol B), Diisocyanat C), Katalysator D), Kettenregulator E1) und Additiv E2), welche auf 100 Gew.-% normiert ist.

Die Umsetzung in Schritt ii. erfolgt vorzugsweise bei einer Temperatur von 50 °C bis 150 °C, weiter bevorzugt von 100 °C bis 145 °C, noch weiter bevorzugt von 120 °C bis 140 °C und/oder bei einer Isocyanat-Kennzahl von 0,95 bis 1,1, weiter bevorzugt 0,97 bis 1,02, noch weiter bevorzugt 0,98 bis 1,0. Die in dem Schritt ii. gebildete Dispersion weist vorzugsweise einen Feststoffgehalt von 5,0 bis 50,0 Gew.-% auf, weiter bevorzugt von 15,0 bis 45,0 Gew.-%, noch weiter bevorzugt von 20,0 bis 40,0 Gew.-%, bestimmt mittels gravimetrischer Messung mit und ohne Lösungsmittel.

Die Isocyanat-Kennzahl errechnet sich aus der Molmenge der reaktiven Isocyanatgruppen geteilt durch die Molmenge der reaktiven Zerewitinow H-aciden Gruppen.

$$KZ = n_{Iso} / n_{H\text{-}acid}$$

Die Umsetzung in Schritt ii. kann auch bei einem niedrigeren oder höheren Druck als der umgebende Atmosphärendruck im Autoklaven erfolgen, zum Beispiel wenn Lösungsmittel A1 und/ oder Lösungsmittel A2 einen niedrigeren Siedepunkt als die Reaktionstemperatur bei ca. 1 bar aufweisen. Bevorzugt ist die Durchführung der Umsetzung in Schritt ii. bei Umgebungsdruck.

Darüber hinaus ist bevorzugt, dass die Abtrennung in Schritt iii. mittels Filtration, Zentrifugation und/oder Abdampfen der Lösungsmittel erfolgt. Das thermoplastische Polyurethan kann in Schritt iii. auch noch zusätzlich mit einem Lösungsmittel gewaschen werden (optionale Waschung). Vorzugsweise umfasst oder besteht dieses Lösungsmittel aus einem Lösungsmittel mit einem Siedepunkt zwischen -30 °C und +250 °C (bei 1 bar), bevorzugt halogenierte Aromaten und Alkane, Ketone, Ether, Ester, Alkohole, Nitrile, Wasser und Carbonate oder Mischungen davon, insbesondere Chlorbenzol, Methylethylketon, Aceton, einem C1-C6-Alkohol und deren Ester, Dimethylcarbonat, Diethylcarbonat Mischungen davon, besonders bevorzugt Chlorbenzol.

Die Trocknung in Schritt iv. erfolgt ferner vorzugsweise mit Bewegung beziehungsweise Durchmischung des Trockenmaterials, besonders bevorzugt in einem Schaufeltrockner.

Es ist außerdem bevorzugt, dass das thermoplastische Polyurethan-Pulver

- ein Massenmittel der Molmasse Mw von 40000 bis 300000 g/mol, bevorzugt von 45000 bis 150000 g/mol, besonders bevorzugt von 55000 bis 100000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- von 30,0 bis 100 Gew.-%, weiter bevorzugt von 40,0 bis 80,0 Gew.-% einer Partikelfraktion von < 0,500 mm, bezogen auf das gesamte thermoplastischen Polyurethan-Pulver und/oder ein Verhältnis von Zentrifugenmittel der Molmasse Mz zu Massenmittel der Molmasse Mw von < 3,0, bevorzugt von 1,5 bis 2,2

aufweist.

Es ist ferner bevorzugt, dass das thermoplastische Polyurethan-Pulver

- ein Massenmittel der Molmasse Mw von 40000 bis 300000 g/mol, bevorzugt von 45000 bis 150000 g/mol, besonders bevorzugt von 55000 bis 100000 g/mol;

- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- > 25,0 Gew.-%, bevorzugt von 40,0 bis 100 Gew.-%, weiter bevorzugt von 50,0 bis 95,0 Gew.-% einer Partikelfraktion von < 0,250 mm, bezogen auf das gesamte thermoplastischen Polyurethan-Pulver und/oder ein Verhältnis von Zentrifugenmittel der Molmasse Mz zu Massenmittel der Molmasse Mw von < 3,0, bevorzugt von 1,5 bis 2,2

aufweist.

Es ist weiter bevorzugt, dass das thermoplastische Polyurethan-Pulver

- ein Massenmittel der Molmasse Mw von 40000 bis 300000 g/mol, bevorzugt von 45000 bis 150000 g/mol, besonders bevorzugt von 55000 bis 100000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- > 5,0 Gew.-%, bevorzugt von 15,0 bis 100 Gew.-%, weiter bevorzugt von 25,0 bis 95,0 Gew.-% einer Partikelfraktion von < 0,100 mm, bezogen auf das gesamte thermoplastischen Polyurethan-Pulver und/oder ein Verhältnis von Zentrifugenmittel der Molmasse Mz zu Massenmittel der Molmasse Mw von < 3,0, bevorzugt von 1,5 bis 2,2

aufweist.

Je nach Auswahl des Pulversinterverfahrens und Anwendungsspezifikationen für das Polyurethanpulver kommen Pulver mit verschiedenen Korngrößen zur Anwendung, jedoch bewegen sich die Korngrößen meist in einem Bereich bis zu 0,500 mm und kleiner.

Ein weiterer wichtiger Aspekt der Korngröße ist die Bildung einer möglichst stabilen Dispersion während der Reaktion und zur Verarbeitung derselben. Nach der Überführung in den industriellen Maßstab muss die Dispersion mittels Pumpen transportiert werden, darf nicht vorzeitig sedimentieren und sollte zudem gute Filtrationseigenschaften aufweisen. Bei zu großer Korngröße sedimentieren die Partikel zu schnell, es kommt zu Ablagerungen und erhöhtem Verschleiß an den Pumpen.

Das thermoplastische Polyurethan nach Schritt iii. und/oder das thermoplastische Polyurethan-Pulver nach Schritt iv. kann/können ferner mit einem Stabilisator aus einer Stabilisatorlösung imprägniert werden. Dafür wird vorzugsweise das thermoplastische Polyurethan nach Schritt iii. und/oder das thermoplastische Polyurethan-Pulver nach Schritt iv. in der Stabilisatorlösung dispergiert und anschließend abgetrennt sowie getrocknet. Die Stabilisatorlösung umfasst vorzugsweise oder besteht vorzugsweise aus

- einem Lösungsmittel, welches aus der Gruppe ausgewählt ist, umfassend oder bestehend aus Lösungsmitteln der Gruppe chlorierte Aromaten; Aliphaten; Ester; Ether; Alkohole; Wasser; Ketone; Nitrile; Carbonate; oder Mischungen davon, oder bevorzugt dem/den Lösungsmittel(n) A1) aus Schritt i., wobei das/die Lösungsmittel vorzugsweise einen Siedepunkt von < 250 °C bei 1 bar aufweisen; und
- einem darin gelösten Stabilisator, welcher aus der Gruppe ausgewählt ist, umfassend oder bestehend aus sterisch gehinderte Phenol-Derivate, organische Phosphin-, Phosphit- und/ oder Phosphonat-Derivate (allgemein auch Phosphor-basierte Stabilisatoren genannt), schwefelhaltige Antioxidantien, 2,2,6,6-Tetramethylpiperidin-Derivate, Benzotriazol-Derivate, Triazin-Derivate, Hydroxybenzophenon-Derivate, Cyanoacrylat-Derivate, Oxalinid-Derivate oder Mischungen davon;

wobei der Gewichtsanteil des Stabilisators bevorzugt von 0,001 bis 10,0 Gew.-%, weiter bevorzugt von 0,05 bis 5,0 Gew.-% beträgt, bezogen auf das Gesamtgewicht der Stabilisatorlösung.

Bevorzugt enthält die Stabilisatorlösung als Phosphor-basierte Stabilisatoren Phosphor(III) Verbindungen, die in der Wärme bei Anwesenheit von Sauerstoff zu Phosphor (V) Verbindungen oxidiert werden. Weiter bevorzugt werden organische Phosphite, Phosphin-Verbindungen und Phosphonate, insbesondere organische Phosphite und Phosphonate, eingesetzt.

Besonders bevorzugt ist der Phosphor-basierte Stabilisator ausgewählt aus mindestens einer Verbindung gemäß den Strukturen (1), (2), (3), (4), (5) und (6).

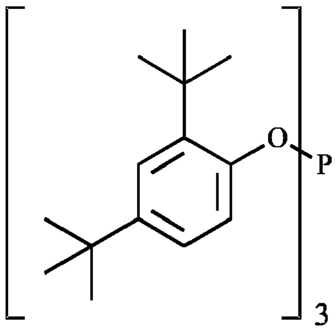

(1)

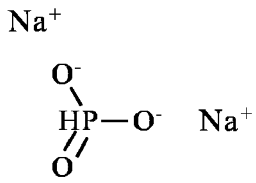

(2)

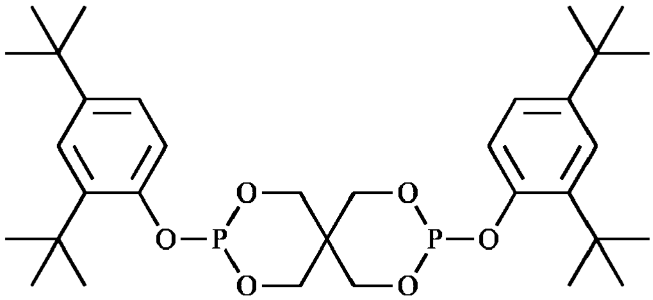

(3)

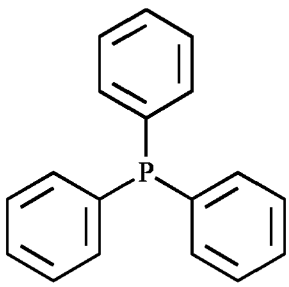

(4)

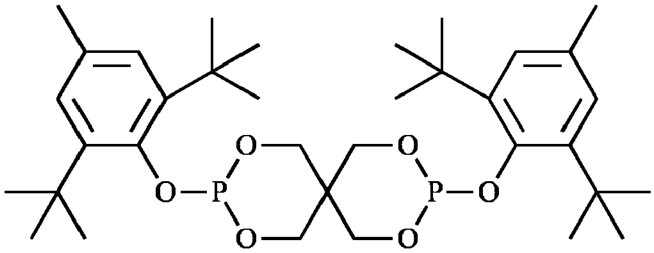

(5)

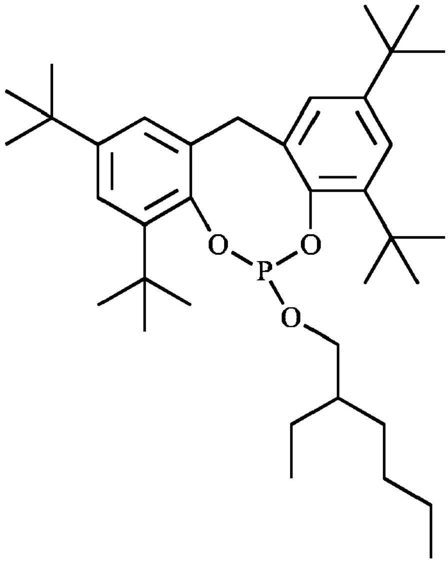

(6)

Die Verbindung (1) ist als CAS: 31570-04-4 klassifiziert und kommerziell unter dem Namen Irgafos™ 168 der Firma BASF (Deutschland) verfügbar.

Die Verbindung (2) ist als CAS: 237-249-1 klassifiziert und kommerziell unter dem Namen. Brüggolen™ H10 der Firma Brüggeman (Deutschland) verfügbar.

Die Verbindung (3) ist als CAS: 26741-53-7 klassifiziert und kommerziell unter dem Namen Irgafos™ 126 der Firma BASF (Deutschland) verfügbar.

Die Verbindung (4) ist als CAS: 603-35-0 klassifiziert und kommerziell unter dem Namen Triphenylphosphin der Firma BASF (Deutschland) verfügbar.

Die Verbindung (5) ist als CAS: 80693-00-1 klassifiziert und kommerziell unter dem Namen ADK Stab™ PEP 36 der Firma Adeka (Japan) verfügbar.

Die Verbindung (6) ist als CAS: 126050-54-2 klassifiziert und kommerziell unter dem Namen ADK Stab™ HP-10 der Firma Adeka (Japan) verfügbar.

Ein weiterer geeigneter Phosphor(III) enthaltener Stabilisator ist AddWorks™ LXR 568 MP der Firma Clariant (Schweiz).

Es ist bevorzugt, dass der Phosphor-basierte Stabilisator aus der Gruppe ausgewählt ist, umfassend oder bestehend aus Verbindungen gemäß den Strukturen (1), (2), (4), (6) oder Mischungen von diesen. Besonders bevorzugt wird als Phosphor-basierter Stabilisator die Verbindung gemäß Struktur (1) und/oder (2) eingesetzt. Durch diese Phosphor-basierten Stabilisatoren wird eine besonders hohe Zugfestigkeit des hergestellten Formkörpers erreicht.

Die Stabilisatorlösung kann außerdem ein sterisch gehindertes Phenol enthalten. Auch Mischungen mehrerer solcher Komponenten und verschiedener Stabilisatoren können eingesetzt werden.

Bevorzugt handelt es sich bei dem sterisch gehinderten Phenol um eine Verbindung der allgemeinen Struktur (7a) oder (7b)

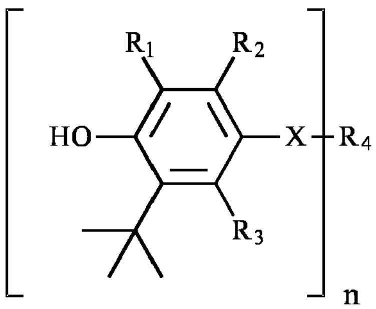

(7a)

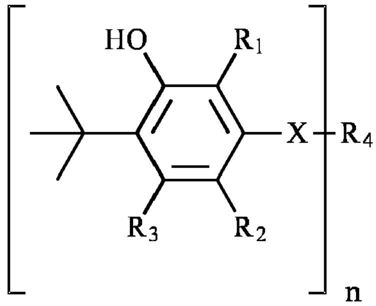

(7b)

wobei n 1, 2, 3 oder 4 bedeutet,

$R_1$, $R_2$ und $R_3$ jeweils unabhängig voneinander für $C_1$- bis $C_4$-Alkyl oder Wasserstoff stehen X für eine direkte Bindung oder einen organischen Rest mit $C_1$- bis $C_{60}$- steht und der organische Rest Sauerstoff und/oder Stickstoff enthalten kann.

$R_4$ für eine direkte Bindung, Kohlenstoff, $C_1$-$C_8$ Alkyl, Aryl oder eine Struktur gemäß Formel (8a) (8b) oder (8c) steht.

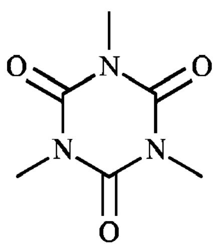

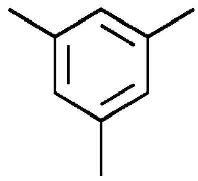

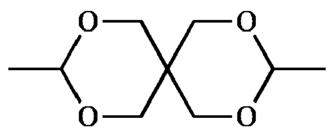

(8a) (8b) (8c)

Besonders bevorzugt ist das sterisch gehinderte Phenol ausgewählt aus mindestens einer Verbindung gemäß den Strukturen (9), (10), (11) und (12).

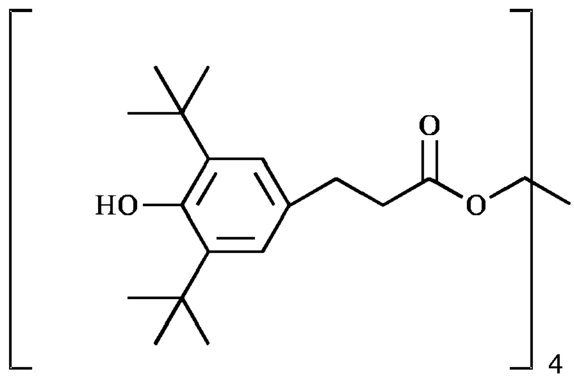

(9)

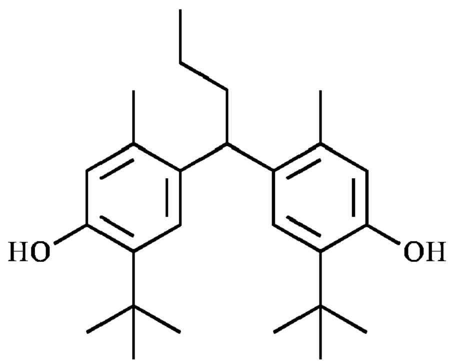

(10)

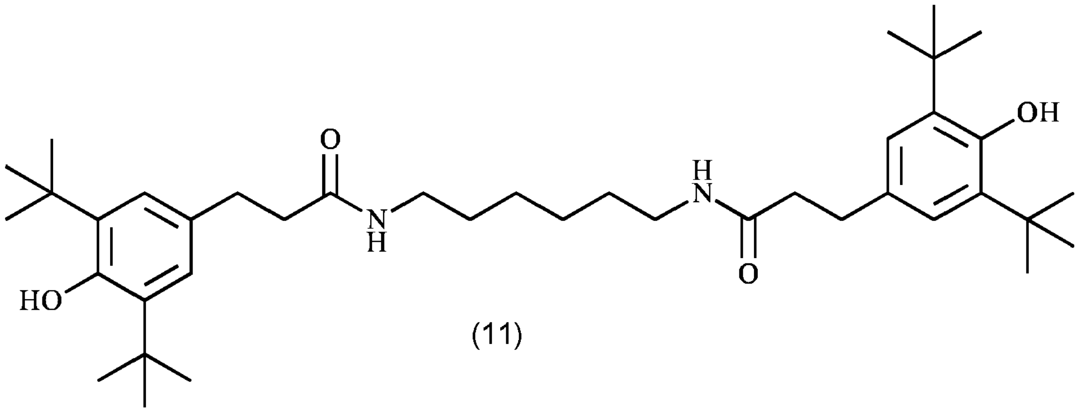

(11)

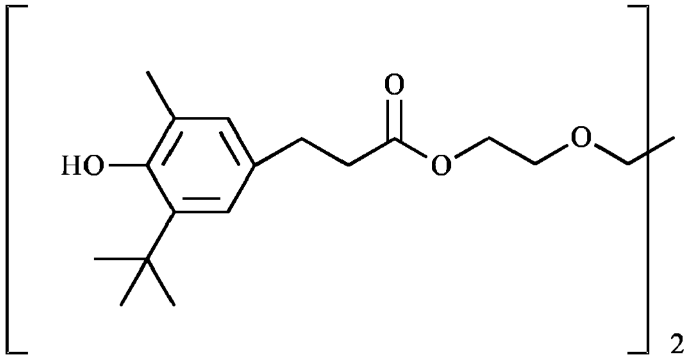

(12)

Die Verbindung (9) ist als CAS: 6683-19-8 klassifiziert und kommerziell unter dem Namen ADK Stab™ AO-60 der Firma Adeka (Japan) verfügbar

Die Verbindung (10) ist als CAS: 85-60-9 klassifiziert und kommerziell unter dem Namen. Songnox™ 4425 der Firma Songwon Industrial Group (Südkorea) verfügbar.

Die Verbindung (11) ist als CAS: 23128-74 klassifiziert und kommerziell unter dem Namen. Songnox™ 1098 der Firma Songwon Industrial Group (Südkorea) verfügbar.

Die Verbindung (12) ist als CAS: 36443-68-2 klassifiziert und kommerziell unter dem Namen Irganox™ 245 der Firma BASF (Deutschland) verfügbar.

Weiterhin kann die Stabilisatorlösung optional ein schwefelhaltiges Antioxidanz enthalten. Auch Mischungen mehrerer solcher Komponenten können eingesetzt werden.

Ein schwefelhaltiges Antioxidanz kann beispielsweise eine Struktur gemäß $R_1$-$CH_2$-$(S)_x$-$CH_2$-$R_2$, aufweisen, wobei x = 1 oder 2 ist und wo $R_1$ und $R_2$ gleich oder verschieden sein können und aromatische oder aliphatische Gruppen darstellen. Bevorzugt handelt es sich bei $R_1$ und $R_2$ um aliphatische Gruppen, die linear oder verzweigt sein können und funktionelle Gruppen enthalten können.

Beispiele von kommerziell verfügbaren schwefelhaltigen Antioxidanzien sind Dilauryl-3,3'-thiodipropionate (CAS 123-28-4), Distearyl-3,3'-thiodipropionat (CAS 693-36-7), Ditridecylthiodipropionate (CAS 10595-72-9); Pentaerythritoltetrakis ([β-laurylthiopropionat (CAS 29598-76-3), 2,2'-Thiodiethylenbis[3-(3,5-di-t-butyl-4-hydroxyphenyl)propionat] (CAS 41484-35-9), Dimyristylthiodipropionate (CAS 16545-54-3) und Distearyldisulfide (CAS 2500-88-1) sowie Mischungen aus diesen Substanzen.

Alternativ kann das schwefelhaltiges Antioxidanz auch einen oder mehrere Diphenylthioester umfassen wie beispielsweise 4,4'-Thiobis(2-t-butyl-5-methlylphenol) (CAS 96-69-5) und 2,2'-Thiobis(6-t-butyl-4-methylphenol) (CAS 90-66-4).

Besonders bevorzugt als schwefelhaltiges Antioxidanz ist Pentaerythritoltetrakis ([β-laurylthiopropionat] (CAS 29598-76-3) (Struktur (13).

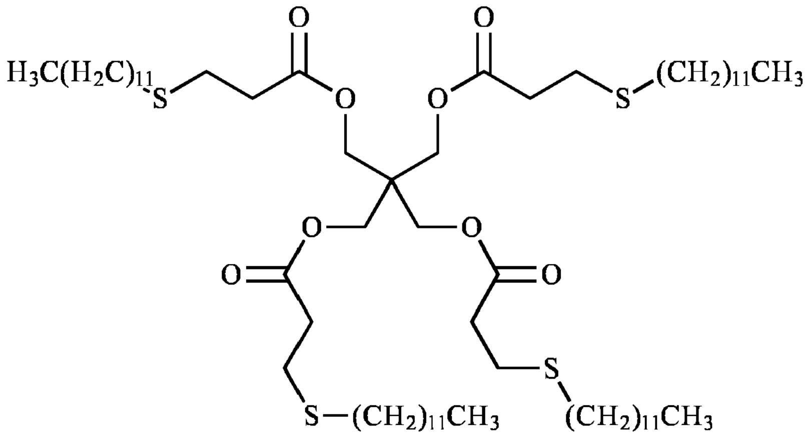

(13)

Ferner ist es bevorzugt, dass das thermoplastische Polyurethanpulver nach der vorgenannten Imprägnierung 0,005 bis 2,0 Gew.-% des Stabilisators aus der Stabilisatorlösung aufweist, bezogen auf das Gesamtgewicht des thermoplastischen Polyurethanpulvers. Das nach der Imprägnierung erhaltene thermoplastische Polyurethan-Pulver weist bevorzugt einen b-Wert von ≤ 4,0, weiter bevorzugt von 0,1 bis 2,5 auf, bestimmt im CIE-Lab Farbraum mittels einem Spektralphotometer mit der Lichtart D 65 bei 8° gemäß DIN EN ISO 11664-4. Ferner ist es bevorzugt, dass das thermoplastische Polyurethan-Pulver eine Änderung des b-Werts (Δb) nach einer Temperatureinwirkung von 120 °C für eine Dauer von 96 h und/oder von 155 °C für eine Dauer von 6 h jeweils unter Luftatmosphäre von ≤ 3,5, bevorzugt von 0,1 bis 2,8, weiter bevorzugt von 0,2 bis 2,0 aufweist, wobei der b-Wert im CIE-Lab Farbraum mittels einem Spektralphotometer mit der Lichtart D 65 bei 8° gemäß DIN EN ISO 11664-4 bestimmt wird und sich die Änderung des b-Werts durch Subtraktion des b-Werts vor der Temperatureinwirkung von dem b-Wert nach der Temperatureinwirkung ergibt. Es wurde nämlich überraschenderweise gefunden, dass durch die vorgenannte erfindungsgemäße Imprägnierung eine Vergilbung des thermoplastischen Polyurethanpulvers, auch nach einer Temperatureinwirkung, verringert wird, welche ansonsten bei durch Lösungsmittelverfahren hergestellten thermoplastischen Polyurethanpulvern, insbesondere aliphatischen thermoplastischen Polyurethanpulvern, auf Grund des Trocknungsschrittes sehr ausgeprägt sein kann (German Plastics Practice, 1946, p 304). Der b-Wert im CIE-Lab Farbraum, wie vorstehend dargelegt, wird im Rahmen der Erfindung als ein Maß für die Vergilbung beziehungsweise den "Weißeindruck" des Polyurethanpulvers verwendet. Der CIE-Lab-Farbraum setzt sich aus dem L-, dem a- und dem vorgenannten b-Wert zusammen. Dabei definiert "L" die Helligkeit, "a" den Rot/Grün-Wert und "b" den Gelb/Blau-Wert. Zur Bestimmung des b-Werts wird eine Farbmessung von der jeweiligen Probe (ca 3 mm Pulverschicht zwischen 2 Deckgläsern für Mikroskopie) mithilfe eines portablen Spektralphotometers (CM5 der Firma Konica Minolta) mit der Lichtart D 65 bei 8° (Beobachter) sowie einer diffusen Beleuchtung gemäß DIN EN ISO 11664-4 durchgeführt. Die Farbe des Pulvers wird dabei in Reflexion gemessen und im CIE-Lab-Farbraum mit den L-, a- und b-Werten angegeben. Der b-Wert wird aus der gemessenen spektralen Reflexionskurve mit Hilfe der Gerätesoftware berechnet.

Ferner betrifft die Erfindung ein thermoplastisches Polyurethan-Pulver, erhalten oder erhältlich nach dem erfindungsgemäßen Verfahren. Wie bereits weiter oben dargelegt wurde, weisen diese thermoplastischen Polyurethan-Pulver eine hohes Massenmittel der Molmassen in Kombination mit einem geringen Allophanatgehalt auf. Sind diese noch zusätzlich erfindungsgemäß imprägniert worden, zeigen diese zudem eine geringere Vergilbung nach Temperatureinwirkung.

Außerdem betrifft die Erfindung die Verwendung des erfindungsgemäßen thermoplastischen Polyurethan-Pulvers in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

Darüber hinaus betrifft die Erfindung ein Formteil, erhalten oder erhältlich durch die Verarbeitung des erfindungsgemäßen thermoplastischen Polyurethan-Pulvers. Vorzugsweise ist das Formteil frei von Gelpartikeln. Die Gelpartikel werden mit einer so genannten Gelbestimmung ermittelt. Dabei wird das thermoplastische Polyurethan-Pulver in einen Standardstab (Dimension 80 mm x 10 mm x 4 mm) spritzgegossen. Der Stab wird mit der flachen Seite auf einen Leuchttisch gelegt. Die Gelpartikel sind mit dem bloßen Auge im Durchlicht als helle Flecken in der sonst homogenen Probe erkennbar. Zusätzlich werden die kreisförmigen Vertiefungen auf der glatten Oberfläche der Probekörper, die durch Gelpartikel nahe der Oberfläche erzeugt werden, gezählt. Um kleinere Fehler des Spritzgusses zu berücksichtigen, wird bei einer Summe der gezählten Gelpartikel X < 5 die Probe als frei ("frei von Gelpartikeln"), bei 5 < X < 15 als wenig, 15 < X < 30 als viel und X > 30 als sehr viel mit Gelen belastet, gewertet.

**Ausführungsformen:**

Die Erfindung betrifft insbesondere folgende Ausführungsformen:
Nach einer ersten Ausführungsform betrifft die Erfindung ein Verfahren zur Herstellung eines thermoplastischen Polyurethan-Pulvers mittels Fällungspolymerisation, umfassend die Schritte:

i. Bereitstellung

A) eines Lösungsmittelgemisches, umfassend mindestens ein erstes aprotisches Lösungsmittel A1) mit einer relativen Permittivität $\varepsilon_r$ von 3 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und 100 kHz gemessen wird;
B) wenigstens eines Polyols mit einer Molmasse zwischen 60 g/mol und 250 g/ mol;
C) wenigstens eines Diisocyanats;
D) optional eines Katalysators;
E) optional eines Kettenregulators E1) und/oder eines Additivs E2);

ii. Umsetzung des Polyols B) mit dem Diisocyanat C) in dem Lösungsmittelgemisch A) bei einer Temperatur von höchstens 150 °C, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittelgemisch A) ausfällt und eine Dispersion bildet;

iii. Abtrennung von dem Lösungsmittelgemisch und optionale Waschung des thermoplastischen Polyurethans mit einem Lösungsmittel; und

iv. Trocknung des thermoplastischen Polyurethans zu dem thermoplastischen Polyurethan-Pulver;

wobei das thermoplastische Polyurethan-Pulver

- ein Massenmittel der Molmasse Mw von > 35000 g/mol;
- einen Allophanatgehalt von < 0,25 mol-%, bezogen auf das gesamte thermoplastische Polyurethan-Pulver; und
- > 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von < 4,0;

aufweist, wobei das Massenmittel der Molmasse Mw, der Allophanatgehalt, die Partikelfraktion sowie das Zentrifugenmittel der Molmasse Mz jeweils mit den in der Beschreibung dargelegten Methoden bestimmt werden.

Nach einer zweiten Ausführungsform betrifft die Erfindung ein Verfahren nach der ersten Ausführungsform, dadurch gekennzeichnet, dass das erste aprotische Lösungsmittel A1) halogenierte Aromaten, Ketone, Ether, Ester und Carbonate oder Mischungen davon, insbesondere Chlorbenzol und/oder ortho-Dichlorbenzol; Cyclopentanon; Cyclohexanon; Heptan-4-on; Acetophenon oder Mischungen davon, bevorzugt Chlorbenzol und/oder das zweite aprotisch polare Lösungsmittel A2) Dimethylsulfoxid, Dimethylformamid, N-Methyl-2-pyrrolidon, Tetramethylharnstoff, 1,3-Dimethyl-3,4,5,6-tetrahydro-2(1H)-pyrimidinion, 1,3-Dimethyl-2-imidazolidinon, N-Ethyl-2-pyrrolidon, Benzonitril, Dimethylacetamid oder Mischungen davon, bevorzugt Dimethylsulfoxid umfasst oder daraus besteht.
Nach einer dritten Ausführungsform betrifft die Erfindung ein Verfahren nach der ersten oder zweiten Ausführungsform, dadurch gekennzeichnet, dass das Verhältnis von dem ersten aprotischen Lösungsmittel A1) zu dem zweiten aprotisch polaren Lösungsmittel A2) 300:1 bis 1:9 beträgt, bevorzugt 200:1 bis 1:1, weiter bevorzugt 100:1 bis 8:2.
Nach einer vierten Ausführungsform betrifft die Erfindung ein Verfahren nach einer der vorstehenden Ausführungsformen, dadurch gekennzeichnet, dass das Polyol B) Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen davon umfasst oder daraus besteht, wobei das Polyol B) vorzugsweise mindestens 50,0 Gew.-% 1,4-Butandiol, besonders bevorzugt mindestens 90,0 Gew.-% 1,4-Butandiol enthält, bezogen auf das Gesamtgewicht des Polyols B).
Nach einer fünften Ausführungsform betrifft die Erfindung ein Verfahren nach einer der vorstehenden Ausführungsformen, dadurch gekennzeichnet, dass das Diisocyanat C) 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat oder Mischungen von diesen umfasst oder daraus besteht, wobei das Diisocyanat C) vorzugsweise mindestens 50,0 Gew.-% 1,5-Pentandiisocyanat oder 1,6-Hexandiisocyanat enthält, bezogen auf das Gesamtgewicht des Diisocyanats C).

Nach einer sechsten Ausführungsform betrifft die Erfindung ein Verfahren nach einer der vorstehenden Ausführungsformen, dadurch gekennzeichnet, dass

- der Katalysator D) ausgewählt ist aus der Gruppe, umfassend oder bestehend aus typischen Urethanisierungskatalysatoren wie sie beispielweise in Becker / Braun, Kunststoffhandbuch Band 7, Polyurethane, Kapitel 3.4 angegeben werden oder Mischungen davon;
- der Kettenregulator E1) ausgewählt ist aus der Gruppe, umfassend oder bestehend aus monofunktionalen Zerewitinow H-aciden Verbindungen, monofunktionalen Isocyanaten oder Mischungen davon; und/oder
- das Additiv E2) ausgewählt ist aus der Gruppe, umfassend oder bestehend aus Stabilisatoren, Farbstoffen, Markern oder Mischungen davon.

Nach einer siebten Ausführungsform betrifft die Erfindung ein Verfahren nach einer der vorstehenden Ausführungsformen, dadurch gekennzeichnet, dass

- 30,0 bis 95,0 Gew.-%, bevorzugt 60,0 bis 90,0 Gew.-% des Lösungsmittelgemischs A);
- 2,0 bis 40,0 Gew.-%, bevorzugt 3,0 bis 20,0 Gew.-% des Polyols B);
- 3,0 bis 40,0 Gew.-%, bevorzugt 5,0 bis 25,0 Gew.-% des Diisocyanats C);
- 0 bis 5,0 Gew.-%, bevorzugt 0 bis 0,1 Gew.-% des Katalysators D);
- 0 bis 10,0 Gew.-%, bevorzugt 0,001 bis 1,5 Gew.-% des Kettenregulators E1);
- 0 bis 20,0 Gew.-%, bevorzugt 0,0001 bis 3,0 Gew.-% des Additivs E2);

bereitgestellt werden, jeweils bezogen auf die Gesamtmenge von Lösungsmittelgemisch A), Polyol B), Diisocyanat C), Katalysator D), Kettenregulator E1) und Additiv E2), welche auf 100 Gew.-% normiert ist.

Nach einer achten Ausführungsform betrifft die Erfindung ein Verfahren nach einer der vorstehenden Ausführungsformen, dadurch gekennzeichnet, dass die Umsetzung in Schritt ii. bei einer Temperatur von 50 °C bis 150 °C, bevorzugt von 100 °C bis 145 °C, weiter bevorzugt von 120 °C bis 140 °C erfolgt.

Nach einer neunten Ausführungsform betrifft die Erfindung ein Verfahren nach einer der vorstehenden Ausführungsformen, dadurch gekennzeichnet, dass die Umsetzung in Schritt ii. bei einer Isocyanat-Kennzahl von 0,95 bis 1,1, bevorzugt 0,97 bis 1,02, weiter bevorzugt 0,98 bis 1,0 erfolgt.

Nach einer zehnten Ausführungsform betrifft die Erfindung ein Verfahren nach einer der vorstehenden Ausführungsformen, dadurch gekennzeichnet, dass die in Schritt ii. gebildete Dispersion einen Feststoffgehalt von 5,0 bis 50,0 Gew.-% aufweist, bevorzugt von 15,0 bis 45,0 Gew.-%, weiter bevorzugt von 20,0 bis 40,0 Gew.-%, bestimmt mittels gravimetrischer Messung mit und ohne Lösungsmittel.

Nach einer elften Ausführungsform betrifft die Erfindung ein Verfahren nach einer der vorstehenden Ausführungsformen, dadurch gekennzeichnet, dass die Abtrennung in Schritt iii. mittels Filtration, Zentrifugation und/oder Abdampfen der Lösungsmittel erfolgt.

Nach einer zwölften Ausführungsform betrifft die Erfindung ein Verfahren nach einer der vorstehenden Ausführungsformen, dadurch gekennzeichnet, dass die Trocknung in Schritt iv. in einem Schaufeltrockner erfolgt.

Nach einer dreizehnten Ausführungsform betrifft die Erfindung ein Verfahren nach einer der vorstehenden Ausführungsformen, dadurch gekennzeichnet, dass das thermoplastische Polyurethan-Pulver

- ein Massenmittel der Molmasse Mw von 40000 bis 300000 g/mol, bevorzugt von 45000 bis 150000 g/mol, besonders bevorzugt von 55000 bis 100000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- von 30,0 bis 100,0 Gew.-%, weiter bevorzugt von 40,0 bis 80,0 Gew.-% einer Partikelfraktion von < 0,500 mm, bezogen auf das gesamte thermoplastischen Polyurethan-Pulver und/oder ein Verhältnis von Zentrifugenmittel der Molmasse Mz zu Massenmittel der Molmasse Mw von < 3,0, bevorzugt von 1,5 bis 2,2;

aufweist.

Nach einer vierzehnten Ausführungsform betrifft die Erfindung ein Verfahren nach einer der vorstehenden Ausführungsformen, dadurch gekennzeichnet, dass das thermoplastische Polyurethan nach Schritt iii. und/oder das thermoplastische Polyurethan-Pulver nach Schritt iv. mit einem Stabilisator aus einer Stabilisatorlösung imprägniert wird, wobei dafür das thermoplastische Polyurethan nach Schritt iii. und/oder das thermoplastische Polyurethan-Pulver nach Schritt iv. in der Stabilisatorlösung dispergiert und anschließend abgetrennt sowie getrocknet wird.

Nach einer fünfzehnten Ausführungsform betrifft die Erfindung ein Verfahren nach der vierzehnten Ausführungsform, dadurch gekennzeichnet, dass die Stabilisatorlösung

- ein Lösungsmittel, welches aus der Gruppe ausgewählt ist, umfassend oder bestehend aus Lösungsmitteln der Gruppe chlorierte Aromaten; Aliphaten; Ester; Ether; Alkohole; Wasser; Ketone; Nitrile; Carbonate; oder Mischungen davon, oder bevorzugt dem/den Lösungsmittel(n) A1) aus Schritt i., wobei das/die Lösungsmittel vorzugsweise einen Siedepunkt von < 250 °C bei 1 bar aufweisen; und

- einen darin gelösten Stabilisator, welcher aus der Gruppe ausgewählt ist, umfassend oder bestehend aus sterisch gehinderte Phenol-Derivate, organische Phosphin-, Phosphit- und/ oder Phosphonat-Derivate, schwefelhaltige Antioxidantien, 2,2,6,6-Tetramethylpiperidin-Derivate, Benzotriazol-Derivate, Triazin-Derivate, Hydroxybenzophenon-Derivate, Cyanoacrlyat-Derivate, Oxalinid-Derivate oder Mischungen davon;

umfasst oder daraus besteht, wobei der Gewichtsanteil des Stabilisators vorzugsweise von 0,001 bis 10,0 Gew.-%, weiter bevorzugt von 0,05 bis 5,0 Gew.-% beträgt, bezogen auf das Gesamtgewicht der Stabilisatorlösung.

Nach einer sechszehnten Ausführungsform betrifft die Erfindung ein Verfahren nach der vierzehnten oder fünfzehnten Ausführungsform, dadurch gekennzeichnet, dass das thermoplastische Polyurethanpulver 0,005 bis 2,0 Gew.-% des Stabilisators aus der Stabilisatorlösung aufweist, bezogen auf das Gesamtgewicht des thermoplastischen Polyurethanpulvers.

Nach einer siebzehnten Ausführungsform betrifft die Erfindung ein Verfahren nach der vierzehnten bis sechszehnten Ausführungsform, dadurch gekennzeichnet, dass das thermoplastische Polyurethan-Pulver einen b-Wert von ≤ 4,0, bevorzugt von 0,1 bis 2,5 und/oder das thermoplastische Polyurethan-Pulver eine Änderung des b-Werts nach einer Temperatureinwirkung von 120 °C für eine Dauer von 96 h und/oder von 155 °C für eine Dauer von 6 h jeweils unter Luftatmosphäre von ≤ 3,5, bevorzugt von 0,1 bis 2,8, weiter bevorzugt von 0,2 bis 2,0 aufweist, wobei der b-Wert im CIE-Lab Farbraum mittels einem Spektralphotometer mit der Lichtart D 65 bei 8° gemäß DIN EN ISO 11664-4 bestimmt wird und sich die Änderung des b-Werts durch Subtraktion des b-Werts vor der Temperatureinwirkung von dem b-Wert nach der Temperatureinwirkung ergibt.

Nach einer achtzehnten Ausführungsform betrifft die Erfindung ein thermoplastisches Polyurethan-Pulver, erhalten oder erhältlich nach einem Verfahren gemäß einer der Ausführungsformen 1 bis 17.

Nach einer neunzehnten Ausführungsform betrifft die Erfindung die Verwendung eines thermoplastischen Polyurethan-Pulvers gemäß der achtzehnten Ausführungsform in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

Nach einer zwanzigsten Ausführungsform betrifft die Erfindung ein Formteil, erhalten oder erhältlich durch die Verarbeitung eines thermoplastischen Polyurethan-Pulvers nach der achtzehnten Ausführungsform.

Nach einer einundzwanzigsten Ausführungsform betrifft die Erfindung ein Formteil nach der zwanzigsten Ausführungsform, dadurch gekennzeichnet, dass das Formteil frei von Gelpartikeln ist, wobei "frei von Gelpartikeln" wie in der Beschreibung dargelegt definiert und bestimmt wird.

## Beispiele

Die vorliegende Erfindung wird anhand der nachfolgenden Beispiele näher erläutert.

**Messmethoden:**

Folgende Messmethoden wurden verwendet:

GPC-Methode zur Bestimmung von Zahlenmittel der Molmasse Mn, Massenmittel der Molmasse Mw und Zentrifugenmittel der Molmasse Mz:

Bestimmung mittels Gelpermeationschromatographie (GPC). Dazu wurde die zu vermessende Probe in einer Lösung von 3 g Kaliumtrifluoracetat in 400 Kubikzentimeter Hexafluorisopropanol aufgelöst (Konzentration der Probe ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH); |
| Detektor: | Smartline RI-Detektor 2300 (Knauer Wissenschaftliche Geräte GmbH); |
| Säulen: | 1 Vorsäule, 1000 Å PSS PFG 7µm, 300 Å PSS PFG 7µm, 100 Å PSS; PFG 7µm in dieser Reihenfolge (PSS Polymer Standards Service GmbH); |
| Entgasung: | Degasser PSS (PSS Polymer Standards Service GmbH); |
| Injektionsvolumen: | 100 Mikroliter; |
| Temperatur: | 23 °C - 25 °C; |
| Molmassen-Standard: | Polymethylmethacrylat-Standard-Kit (PSS Polymer Standards Service GmbH). |

Das Zahlenmittel der Molmasse ($\overline{M}_n$) wurde aus den durch die Messung der Gelpermeationschromatographie erhaltenen Daten mit Hilfe der folgenden Gleichung errechnet:

$$\overline{M}_n = \frac{\sum_i n_i M_i}{\sum_i n_i}$$

in g/mol
wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i*, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i}$$

in g/mol
wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i*, in mol ist.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2}$$

in g/mol
wobei:

$M_i$ die molare Masse der Polymere der Fraktion *i* ist, so dass $M_i < M_{i+1}$ für alle *i,* in g/mol ist,
$n_i$ die Stoffmenge des Polymers der Fraktion *i*, in mol ist.

Allophanatgehalt:

Der Allophanatgehalt wurde mittels $^1$H-NMR bestimmt. Die Messungen wurden mit einem Bruker AV III HD 600 Spektrometer bei 600 MHz in DMSO-D6 bei 80 °C durchgeführt.
Folgende Peaks wurden ausgewertet:

| | | | |
|---|---|---|---|
| U= | $CH_2$-NH | 2.98 ppm | $CH_2$ bei Urethan |
| O= | $CH_2$-OH | 3.43 ppm | $CH_2$ bei OH-Gruppen |
| N= | N-H | 6.6 ppm | Urethan |
| A= | N-H | 8.3-8.4 ppm | Allophanat |

Die aliphatische Allophanat Konzentration in mol-% wurde nach folgender Formel berechnet:

$$\text{Allophanat [mol-\%]} = 100\ \% * A/\ (A+N)$$

Die Kennzahl für den Umsatz ergibt sich aus der Formel:

$$KZ = 1/\ (1+O/U)$$

Farbwerte:

Die Farbwerte im CIE-Lab Farbraum wurden mit einem Konica Minolta CM5 Spektralphotometer unter diffuser Beleuchtung (d/8 Geometrie) gemäß DIN EN ISO 11664-4 bestimmt.

Differentialkalorimetrie (DSC):

Der Schmelzpunkt wurde mittels DSC (Differential Scanning Calorimetry) mit einem DSC Q2000 V24.11 der Firma TA Instruments entsprechend DIN EN 61006 (November 2004) bestimmt. Eine Kalibrierung erfolgte durch die Temperatur des Schmelz-Onsets von Indium und Blei. Es wurden ca. 10 mg Substanz in Normalkapseln eingewogen. Die Messung erfolgte durch 2 Aufheizungen von -20 °C bis +220 °C bei einer Heizrate von 20 K/ min mit zwischenzeitlicher Abkühlung mit einer Kühlrate von 20 K/ min. Die Kühlung erfolgte durch flüssigen Stickstoff. Als Spülgas wurde Stickstoff verwendet. Die erste Aufheizung löscht die thermische Vorgeschichte der Probe. Die angegebenen Werte basieren jeweils auf der Auswertung der ersten Abkühlkurve und der 2. Aufheizkurve.

Bestimmung des E-Modul und der Bruchdehnung:

Die Zugprüfung wurde in Anlehnung an die Prüfmethode DIN EN ISO 527 mit Probekörpern Typ 5A (DIN EN ISO 527-2, Dicke 2 mm) durchgeführt.. Die Probekörper wurden vor dem Versuch mindestens 24 h bei Normbedingungen gelagert. Die Zugversuche erfolgten bei 22 °C und 50 % relativer Feuchte, durchgeführt mit einer Universalprüfmaschine Z010 der Fa. Zwick mit einer Geschwindigkeit von 10 mm/ min. Der E-Modul wurde zwischen 0,05 % und 0,25 % Dehnung ermittelt mittels Sekante.

Isocyanat-Titration:

Durch Rücktitration von Butylamin mit 0,1 N Salzsäure nach Zugabe eines Aminüberschusses zu einer Isocyanatlösung unter Zuhilfenahme eines Metrohm, 751 GPD titrino 685 Dosimat und 728 Rührer.

Herstellung Probekörper für die Zugversuche

Das Polymer wurde bei 80 °C im Trockenschrank für 4 h getrocknet und anschließend auf einem Mikroextruder MC 15 HT (15 mL) der Firma Xplore verarbeitet und mit dem dazugehörigen Spritzgußteil Micro moulder IM 12 in die benötigte Form gebracht.

Gelbestimmung:

Das jeweilige Polymer-Pulver wurde in einen Standardstab (Dimension 80 mm x 10 mm x 4 mm) spritzgegossen. Der Stab wurde mit der flachen Seite auf einen Leuchttisch gelegt. Die Gelpartikel waren mit dem bloßen Auge im Durchlicht als helle Flecken in der sonst homogenen Probe erkennbar. Zusätzlich wurden die kreisförmigen Vertiefungen auf der glatten Oberfläche der Probekörper, die durch Gelpartikel nahe der Oberfläche erzeugt werden, gezählt. Um

kleinere Fehler des Spritzgusses zu berücksichtigen wurde bei einer Summe der gezählten Gelpartikel X < 5 die Probe als frei, bei 5 < X < 15 als wenig, 15 < X < 30 als viel und X > 30 als sehr viel mit Gelen belastet, gewertet.

Siebung:

100 g Probenmenge wurden 5 min mit einer Haver & Boecker Laborsiebmaschine Nr. 7279 (Bj. 1978) und den entsprechenden Siebsätzen (0,100 mm, 0,250 mm und 0,500 mm) gesiebt und die einzelnen Fraktionen danach gewogen.

**Materialien:**

Für die Komponenten A) bis E) wurden die folgenden Materialien eingesetzt:

Erstes aprotisches Lösungsmittel A1):

- Chlorbenzol in Analysenqualität, bezogen von der Firma Azelis Deutschland GmbH, relative Permittivität: $\varepsilon_r$ = 5,6 (siehe Literatur 1.) weiter unten)
- o-Dichlorbenzen (oDCB) 99 %, bezogen von der Firma Acros Organics, relative Permittivität: $\varepsilon_r$ = 9,9 (siehe Literatur 1.) weiter unten)
- Aceton in Analysenqualität, bezogen von der Firma Merck, relative Permittivität: $\varepsilon_r$ = 21,5 (siehe Literatur 1.) weiter unten)
- Butylacetat, bezogen von der Firma Azelis Deutschland GmbH, relative Permittivität: $\varepsilon_r$ = 5,0 (siehe Literatur 1.) weiter unten)
- Iso-Amylacetat, Isomerengemisch aus 2- und 3-Methylbutylacetat, 99% bezogen von der Firma Thermo Fischer, relative Permittivität: $\varepsilon_r$ = 4,8 (siehe Literatur 1.) weiter unten)
- 4-Heptanon 98 %, bezogen von der Firma Thermo Fischer, relative Permittivität: $\varepsilon_r$ = 12,6 (siehe Literatur 1.) weiter unten)
- Cyclohexanon 99,8%, bezogen von der Firma Merck, relative Permittivität: $\varepsilon_r$ = 18,2 (siehe Literatur 9.) weiter unten)
- Methoxypropylacetat, bezogen von der Firma Azelis Deutschland GmbH
- Xylol, bezogen von der Firma Azelis Deutschland GmbH, relative Permittivität: $\varepsilon_r$ = 2,3 (siehe Literatur 1.) weiter unten)

Zweites aprotisch polares Lösungsmittel A2):

- Dimethylformamid (DMF) ≥ 99 %, bezogen von der Firma Merck, relative Permittivität: $\varepsilon_r$ = 37,6 (siehe Literatur 1.) weiter unten)
- Dimethylsulfoxid (DMSO) 99,9 %, bezogen von der Firma Merck, relative Permittivität: $\varepsilon_r$ = 47,3 (siehe Literatur 2.) weiter unten)
- Dimethylacetamid (DMA) ≥ 99 %, bezogen von der Firma Merck, relative Permittivität: $\varepsilon_r$ = 38,9 (siehe Literatur 8.) weiter unten)
- Benzonitril (PhCN) 99 %, bezogen von der Firma Merck, relative Permittivität: $\varepsilon_r$ = 25,6 (siehe Literatur 1.) weiter unten)
- N-Methylpyrrolidon (NMP), bezogen von der Firma Azelis Deutschland GmbH, relative Permittivität: $\varepsilon_r$ = 32,5 (siehe Literatur 3.) weiter unten)
- Tetramethylharnstoff (TMU) 99 %, bezogen von der Firma Merck, relative Permittivität: $\varepsilon_r$ = 24,5 (siehe Literatur 6.) weiter unten)
- 1,3-Dimethyl-2-imidazolidinon ≥ 99,5 %, bezogen von der Firma Merck, relative Permittivität: $\varepsilon_r$ = 37,6 (siehe Literatur 7.) weiter unten)
- Propylencarbonat 99 %, bezogen von der Firma Merck, relative Permittivität: $\varepsilon_r$ = 65 (siehe Literatur 5.) weiter unten)
- Gamma-butyrolacton ≥ 99 %, Bezogen von der Firma TCI, relative Permittivität: $\varepsilon_r$ = 42,3 (siehe Literatur 4.) weiter unten)

Literatur: 1.) DK Handbook, Endress+Hauser Messtechnik GmbH&Co. (1999); 2.) Hunger et al J. Chem. Eng. Data 2010, 55, 5, 2055-2065; 3.) Granzhan et al, Zh. Prikl. Khim. 43 (1970) 1875-1877; 4.) MouMouzias et al J. Chem. Eng. Data 1999, 44, 6, 1273-1278; 5.) Barthel et al J. Chem. Eng. Data 2000, 45, 6, 1007-1011; 6.) Data from NIST Standard Reference Database 69: NIST Chemistry WebBook; 7.) Volume 17 'Static Dielectric Constants of Pure Liquids and Binary Liquid Mixtures (Supplement to IV/6)' of Landolt-Börnstein Group IV 'Physical Chemistry'; 8.) Dielectric Constant of Common solvents.xls (washington.edu); 9.) Referenzwerte für Dielektrizitätskonstanten von Magtech Produkten | Emerson DE

Polyol B):

- Ethylenglycol (EG)
- 1,4-Butandiol (BDO) (Firma: Ashland), Reinheit: ≥ 99 % Gew.-%;

Diisocyanat C):

- 1,6-Hexamethylendiisocyanat (HDI) (Firma: Covestro AG), Reinheit: ≥ 99 % Gew.-%;
- 1,5-Pentamethylendiisocyanat (PDI) (Firma: Covestro AG), Reinheit: ≥ 99 % Gew.-%;
- 4,4'-Methylendiphenylisocyanat (MDI) (Firma: Covestro AG, Reinheit: ≥ 99 % Gew.-%;.

Kettenregulator E1):

- n-Octanol in Analysenqualität, bezogen von der Firma Arcos Organics, Reinheit: ≥ 99 % Gew.-%;.

Additiv E2):

- Irganox™ 245 der Firma BASF
- Irgafos™ 168 der Firma BASF

**Versuchsdurchführung und Ergebnisse:**

Versuch 1: HDI und BDO in Chlorbenzen (Lösungsmittel A1) und verschiedenen Lösungsmitteln A2 (nachfolgend auch Co-Lösungsmittel genannt)

Es wurden 1200 mL einer Mischung aus Chlorbenzen und Co-Lösungsmittel (10:1), 100,9 g (1,12 mol) BDO, 1,43 g (11 mmol) n-Octanol sowie 94,9 g (0,565 mol) HDI in einem 2L Reaktionsgefäß mit Thermometer, Rückflußkühler und mechanischen Rührer bei 20 °C eingefüllt. Die Mischung wurde auf dem Ölbad langsam bis zum Rückfluß erwärmt und weitere 94,9 g (0,565 mol) HDI mittels Tropftrichter unter Rühren so zugegeben, dass die Mischung am Rückfluß sanft siedete. Nach beendeter Zugabe wurde die Mischung weitere 5 Stunden am Rückfluß erhitzt. Das Polymer fiel dabei als weißes Pulver aus. Die Mischung wurde auf 20 °C abgekühlt und abfiltriert (Nutsche), und der Rückstand mit 2 mal je 150 mL Chlorbenzen und 2 mal mit je 150 mL Aceton nachgewaschen. Der weiße Feststoff wurde zunächst an der Luft und dann im Vakuum bei 120 °C bis zur Gewichtskonstanz getrocknet. Im NMR Spektrum wurde bei den erfindungsgemäßen Beispielen kein Allophanat gefunden. Die Spritzkörper zeigten keine Gelpartikel. Anschließend wurde das Produkt mittels einer Vibrationssiebung mit den Siebeinsätzen 0,100 mm, 0,250 mm, 0,500 mm in 4 Partikelfraktionen getrennt. Die Ergebnisse sind in Tabelle 1 zusammengefasst:

**Tabelle 1**

| Versuch | Co-Lösemittel | Ausbeute [g] | Anteil in Gew.-%<br>< 0,100<br>0,100 - 0,250<br>0,250 - 0,500<br>>0,500 mm | Mw [g/mol]<br>Mn [g/mol]<br>Mz [g/mol] | E-Modul [MPa] | Bruchdehnung [%] |
|---|---|---|---|---|---|---|
| 1a<br>Nicht erfindungsgemäß | - | 264 | Nicht bestimmt | 27412<br>7531<br>55511 | 1363 ± 53 | 69 ± 83 |
| 1b<br>Nicht erfindungsgemäß | oDCB | 277 | Nicht bestimmt | 28669<br>9334<br>52012 | 1981 ± 162 | 16 ± 8 |
| 1c | DMSO | 264 | 46 | 88273 | 1267 ± 97 | 249 ± 54 |

(fortgesetzt)

| Versuch | Co-Lösemittel | Ausbeute [g] | Anteil in Gew.-%<br>< 0,100<br>0,100 - 0,250<br>0,250 - 0,500<br>>0,500 mm | Mw [g/mol]<br>Mn [g/mol]<br>Mz [g/mol] | E-Modul [MPa] | Bruchdehnung [%] |
|---|---|---|---|---|---|---|
| | | | 36<br>8<br>10 | 13716<br>181515 | | |
| 1d | NMP | 272 | 19<br>68<br>4<br>9 | 46307<br>9878<br>90883 | 1141 ± 64 | 248 ± 19 |
| 1e | DMA | 271 | 17<br>42<br>6<br>35 | 55841<br>10287<br>120960 | 1344 ± 63 | 271 ± 12 |
| 1f | DMF | 278 | 51<br>19<br>6<br>24 | 52493<br>9133<br>114279 | 1348 ± 122 | 292 ± 18 |
| 1g | PhCN | 267 | 14<br>37<br>31<br>18 | 45261<br>9300<br>87209 | 1368 ± 399 | 262 ± 41 |
| 1h | Tetramethyl harnstoff | 276 | 3<br>11<br>23<br>63 | 63319<br>15413<br>114286 | 1921±115 | 256 ± 36 |
| 1i | 1,3-Dimethyl-2-imidazolidin on | 279 | 7<br>31<br>51<br>11 | 73199<br>14297<br>137532 | 1655 ± 62 | 234 ± 60 |

Versuch 2: Variation Verhältnis Lösungsmittel A1 (Chlorbenzen) zu Lösungsmittel A2 (DMSO) (erfindungsgemäß)

Es wurden 1200 mL einer Mischung aus Chlorbenzen und DMSO, 198,0 g (2,2 mol) BDO, 2,86 g (22 mmol) n-Octanol sowie 189,8 g (1,13 mol) HDI in einem 2L Reaktionsgefäß mit Thermometer, Rückflußkühler und mechanischen Rührer bei 20 °C eingefüllt. Die Mischung wurde auf dem Ölbad langsam bis zum Rückfluß erwärmt und weitere 189,8 g (1,13 mol) HDI mittels Tropftrichter unter Rühren so zugegeben, dass die Mischung am Rückfluß sanft siedete. Nach beendeter Zugabe wurde die Mischung weitere 5 Stunden am Rückfluß erhitzt. Das Polymer fiel dabei als weißes Pulver aus. Die Mischung wurde auf 20 °C abgekühlt und abfiltriert (Nutsche), und der Rückstand mit 2 mal je 150 mL Chlorbenzen und 2 mal mit je 150 mL Aceton nachgewaschen. Der weiße Feststoff wurde zunächst an der Luft und dann im Vakuum bei 120 °C bis zur Gewichtskonstanz getrocknet. Im NMR Spektrum wurde kein Allophanat gefunden. Die Spritzkörper zeigten keine Gelpartikel. Anschließend wurde das Produkt mittels einer Vibrationssiebung mit den Siebeinsätzen 0,100 mm, 0,250 mm, 0,500 mm in 4 Partikelfraktionen getrennt. Die Ergebnisse sind in Tabelle 2 zusammengefasst:

**Tabelle 2**

| Versuch | Verhältnis MCB/ DMSO | Ausbeute [g] | Anteil in Gew.-% < 0,100<br>0,100 - 0,250<br>0,250 - 0,500<br>>0,500 mm | Mw [g/ mol]<br>Mn [g/ mol]<br>Mz [g/ mol] | E-Modul [MPa] | Bruchdeh nung [%] |
|---|---|---|---|---|---|---|
| 2a | 10:1 | 529 | 25<br>31<br>12<br>22 | 60552<br>13396<br>108642 | 1296 ± 83 | 276 ± 36 |
| 2b | 20:1 | 518 | 31<br>18<br>6<br>45 | 67958<br>14758<br>130907 | 1376 ± 40 | 285 t 20 |
| 2c | 40:1 | 556 | 21<br>27<br>12<br>40 | 45560<br>10207<br>87325 | 1397 ± 77 | 268 ± 10 |
| 2d | 80:1 | 547 | 26<br>54<br>4<br>16 | 44633<br>12668<br>80824 | 1629 ± 51 | 242 ± 27 |
| 2e | 160:1 | 550 | 22<br>55<br>5<br>18 | 39787<br>11519<br>73294 | 1448 ± 107 | 252 ± 24 |

Versuch 3: PDI+BDO in Chlorbenzen/ DMSO (erfindungsgemäß)

Es wurden 1100 mL Chlorbenzen, 100 mL DMSO, 198,0 g (2,2 mol) BDO, 2,86 g (22 mmol) n-Octanol sowie 170,94 g (1,11 mol) PDI in einem 2L Reaktionsgefäß mit Thermometer, Rückflußkühler und mechanischen Rührer bei 20 °C eingefüllt. Die Mischung wurde auf dem Ölbad langsam bis zum Rückfluß erwärmt und weitere 169,4 g (1,10 mol) PDI mittels Tropftrichter unter Rühren so zugegeben, dass die Mischung am Rückfluß sanft siedete. Nach beendeter Zugabe wurde die Mischung weitere 5 Stunden am Rückfluß erhitzt. Das Polymer fiel dabei als weißes Pulver aus. Die Mischung wurde auf 20 °C abgekühlt und abfiltriert (Nutsche), und der Rückstand mit erst 800 mL und dann 2 mal mit je 100 ml Aceton nachgewaschen. Der weiße Feststoff wurde zunächst an der Luft und dann im Vakuum bei 120 °C bis zur Gewichtskonstanz getrocknet. Die Ausbeute betrug 495 g (91 %). Die Siebung ergab einen Anteil von 39 Gew.-% mit Partikelgröße kleiner 0,100 mm, 45 Gew.-% mit < 0,250 mm und 49 Gew.-% mit < 0.500 mm. Im NMR Spektrum wurde kein Allophanat gefunden. Die GPC ergab Mw: 77491 g/ mol; Mn: 12739 g/ mol; Mz: 169409 g/ mol. DSC ergab eine Schmelztemperatur Tm 160 °C. Die Zugprüfung ergab einen E-Modul von 993 ± 33 MPa und eine Bruchdehnung von 340 ± 11 %. Die Spritzkörper zeigten keine Gelpartikel.

Versuch 4: HDI/ BDO/ MDI in Chlorbenzen/ DMSO (erfindungsgemäß)

Es wurden 1000 mL Chlorbenzen, 100 mL DMSO, 100,9 g (1,12 mol) BDO, 0,28 g (2,2 mmol) n-Octanol sowie 94,9 g (0,565 mol) HDI in einem 2L Reaktionsgefäß mit Thermometer, Rückflußkühler und mechanischen Rührer bei 20 °C eingefüllt. Die Mischung wurde auf dem Ölbad langsam bis zum Rückfluß erwärmt und weitere 85,4 g (0,508 mol) HDI mit Tropftrichter unter Rühren so zugegeben, dass die Mischung am Rückfluß sanft siedete. Nach beendeter HDI-Zugabe wurde die Mischung weitere 2 Stunden am Rückfluß erhitzt. Dann wurden 16,95 g (0,068 mol) 4,4'-MDI gelöst

in 100 mL Chlorbenzen tropfenweise zugegeben und die Lösung weitere 2 Stunden am Rückfluß erwärmt. Die Mischung wurde auf Raumtemperatur unter ständigem Rühren abgekühlt. Das Polymer fiel dabei als weißes Pulver aus. Die Mischung wurde abfiltriert (Nutsche) und der Rückstand 3 mal mit 250 mL Aceton nachgewaschen. Der weiße Feststoff wurde im Vakuum bei ca. 120 °C bis zur Gewichtskonstanz getrocknet. Die Ausbeute betrug 280 g (93 %). Die Siebung ergab einen Anteil von 31 Gew.-% mit Partikelgröße kleiner 0,100 mm, 36 Gew.-% mit < 0,250 mm und 38 Gew.-% mit < 0,500 mm. Im NMR Spektrum wurde kein Allophanat gefunden. Die GPC ergab Mw: 155479 g/ mol; Mn: 14144 g/ mol; Mz: 476293 g/ mol. DSC ergab eine Schmelztemperatur Tm 172 °C. Die Zugprüfung ergab einen E-Modul von 1425 ± 77 MPa und eine Bruchdehnung von 131 ± 28 %. Die Spritzkörper zeigten keine Gelpartikel.

Versuch 5: HDI/ EG in Chlorbenzen/ DMSO (erfindungsgemäß)

Es wurden 1140 mL Chlorbenzen, 60 mL DMSO, 94,79 g (1,53 mol) Ethylenglycol und 1,95 g (15 mmol) n-Octanol in einem 2L Reaktionsgefäß mit Thermometer, Rückflußkühler und mechanischen Rührer bei 20 °C eingefüllt und die Mischung auf dem Ölbad bis zum Rückfluß erwärmt. Nun wurden 260,71 g (1,55 mol) HDI mit Tropftrichter unter Rühren so zugegeben, dass die Mischung am Rückfluß sanft siedete. Nach beendeter HDI Zugabe wurde weitere 5 Stunden am Rückfluß erhitzt und anschließend auf Raumtemperatur abgekühlt. Das Polymer fällt dabei als weißes Pulver aus. Die Mischung wurde abfiltriert (Nutsche) und der Rückstand 3 mal mit 200 mL Chlorbenzol nachgewaschen. Der weiße Feststoff wurde bei ca. 80 °C 24 Stunden im Umluftofen getrocknet. Die Ausbeute betrug 301 g (84 %). Die Siebung ergab einen Anteil von 0 Gew.-% mit Partikelgröße kleiner 0,100 mm, 4 Gew.-% mit < 0,250 mm und 48 Gew.-% mit < 0,500 mm. Im NMR Spektrum wurde kein Allophanat gefunden. Die GPC ergab Mw: 165224 g/ mol; Mn: 22951 g/ mol; Mz: 425648 g/ mol. DSC ergab eine Schmelztemperatur Tm 168 °C. Die Spritzkörper zeigten keine Gelpartikel.

Versuch 6: HDI und BDO bei verschiedenen T in Lösungsmittel A1 (o-Dichlorbenzen; nicht erfindungsgemäß)

a. Bei 110 °C

Es wurden 100 mL ortho-Dichlorbenzen, 10,03 g (0,11 mol) BDO, 0,16 g (1,25 mmol) n-Octanol sowie 9,49 g (0,056 mol) HDI in einem 250 mL Reaktionsgefäß mit Thermometer, Rückflußkühler und mechanischen Rührer bei 20 °C eingefüllt. Die Mischung wurde auf dem Ölbad langsam bis 110 °C erwärmt. Dann wurden weitere 9,49 g (0,056 mol) HDI mit Tropftrichter unter Rühren so zugegeben, dass die Temperatur der Mischung 110 °C nicht überstieg. Nach beendeter Zugabe wurde die Mischung weitere 5 Stunden bei 110 °C erhitzt. Die Mischung wurde auf 20 °C unter ständigem Rühren abgekühlt. Das Polymer fiel dabei als weißes Pulver aus. Die Mischung wurde abfiltriert (Nutsche) und der Rückstand 3 mal mit je 100 mL Aceton nachgewaschen. Der weiße Feststoff wurde anschließend im Vakuum bei 80 °C bis zur Gewichtskonstanz getrocknet. Die Ausbeute betrug 25,6 g (88 %). Im NMR Spektrum wurde kein Allophanat gefunden. Die GPC ergab Mw: 16337 g/ mol; Mn: 5737 g/ mol; Mz: 32101 g/ mol.

b. Bei 130 °C

Der Versuch wurde wie unter a.) beschrieben aber bei 130 °C durchgeführt. Die Ausbeute betrug 25,6 g (88 %). Im NMR Spektrum wurde kein Allophanat gefunden. Die GPC ergab Mw: 30846 g/ mol; Mn: 9721 g/ mol; Mz: 59423 g/ mol. Die Zugprüfung ergab einen E-Modul von 1985 ± 92 MPa und eine Bruchdehnung von 16 ± 2 %. Die Spritzkörper zeigten keine Gelpartikel.

c. Bei 150 °C

Der Versuch wurde wie unter a.) beschrieben aber bei 150 °C durchgeführt. Die Ausbeute betrug 26,2 g (90 %). Im NMR Spektrum wurden 0,5 mol-% Allophanat gefunden. Die GPC ergab Mw: 254174 g/ mol; Mn: 14363 g/ mol; Mz: 3243653 g/ mol. Die Zugprüfung ergab einen E-Modul von 1815 ± 129 MPa und eine Bruchdehnung von 134 ± 9 %. Die Spritzkörper zeigten viele (>>30) Gelpartikel.

d. Bei 180 °C

Der Versuch wurde wie unter a.) beschrieben aber bei 180 °C durchgeführt. In der Reaktionsmischung formten sich zunächst sichtbar Gele und nach beendeter Zugabe des HDI bildete sich ein großer Gelklumpen am Rührer. Das Produkt wurde nicht weiter aufgearbeitet.

Versuch 7: HDI+BDO in verschiedenen Lösungsmittel A1 (nicht erfindungsgemäß)

Es wurden 1100 mL Lösungsmittel A1 sowie 202,5 g (2,25 mol) BDO und 190,2 g (1,13 mol) HDI in einem 2L Reaktionsgefäß mit Thermometer, Rückflußkühler und mechanischen Rührer bei 20 °C eingefüllt. Die Mischung wurde auf dem Ölbad langsam bis zum Rückfluß bzw. 135 °C erwärmt. Nun wurden weitere 190,2 g (1,13 mol) HDI mittels Tropftrichter unter Rühren so zugegeben, dass die Mischung am Rückfluß sanft siedete (bzw. die Temperatur 135 °C nicht überstieg). Nach beendeter Zugabe wurde die Mischung weitere 2 Stunden am Rückfluß (bzw. bei 135 °C) erhitzt. Das Polymer fiel dabei als weißes Pulver aus. Die Mischung wurde abfiltriert (Nutsche) und der Rückstand 2 mal mit je 150 mL Aceton nachgewaschen. Der weiße Feststoff wurde nun im Vakuum bei ca 80 °C bis zur Gewichtskonstanz getrocknet. Die Ergebnisse sind in Tabelle 3 zusammengefasst:

**Tabelle 3**

| Versuch | Lösungsmittel A1 | Ausbeute [g] / Erscheinung | Allophanatgehalt [mol-%] | Mw [g/ mol]<br>Mn [g/ mol]<br>Mz [g/ mol] |
|---|---|---|---|---|
| 7a | Butylacetat | 553 weißes Pulver | 0,1 | 11280<br>3990<br>20641 |
| 7b | Cyclohexanon | klumpig, klebrig | 0,2 | 33161<br>8686<br>57405 |
| 7c | Methoxypropylac etat | 478 weißes Pulver | 0,2 | 26608<br>7399<br>53446 |
| 7d | Xylol | klumpig | 0,2 | 33732<br>9925<br>75515 |
| 7e | 4-Heptanon | 471 gelbes Pulver | 0,2 | 26279<br>4389<br>356694 |
| 7f | Amylacetat | 476 weißes Pulver | 0,2 | 27686<br>8159<br>55113 |

Versuch 8: HDI+BDO in Lösungsmittel A2 Propylencarbonat (nicht erfindungsgemäß da kein Pulver)

1000 mL Propylencarbonat, 178,2 g (1,98 mol) BDO, 2,60 g (20 mmol) n-Octanol sowie 168,0 g (1,00 mol) HDI wurden in einem 2L Reaktionsgefäß mit Thermometer, Rückflußkühler und mechanischen Rührer bei 20 °C eingefüllt und die Mischung auf dem Ölbad auf 135 °C erwärmt. Es wurden weitere 168,0 g (1,00 mol) HDI mit Tropftrichter unter Rühren tropfenweise zugegeben, so dass die Innentemperatur der Mischung 135 °C nicht überstieg. Nach beendeter Zugabe wurde die Mischung weitere 5 Stunden bei 135 °C erhitzt, wobei das Polymer anfing, auszufallen. Die Reaktionsmischung wurde abgekühlt, der Feststoff abfiltriert (Nutsche) und der Rückstand 3 mal mit 250 mL Propylencarbonat nachgewaschen. Der Filterkuchen wurde anschließend bei 120 °C im Vakuum getrocknet. Die Ausbeute betrug 480 g (92 %) als großer, weißer Klumpen. Die Siebung ergab einen Feinanteil mit Partikelgröße < 0,500 mm von weniger 5 Gew.-%. Im NMR Spektrum wurden 0,2 mol-% Allophanat gefunden. Die GPC ergab Mw: 85606 g/ mol; Mn: 17210 g/ mol; Mz: 189611 g/ mol.

Versuch 9: HDI+BDO in Lösungsmittel A2 γ-Butyrolacton (nicht erfindungsgemäß da kein Pulver)

1000 mL gamma-Butyrolacton, 178,2 g (1,98 mol) BDO, 2,60 g (20 mmol) n-Octanol sowie 168,0 g (1,00 mol) HDI wurden in einem 2L Reaktionsgefäß mit Thermometer, Rückflußkühler und mechanischen Rührer bei 20 °C eingefüllt. Die Mischung wurde nun auf dem Ölbad auf 135 °C erwärmt. Nun wurden weitere 168,0 g (1,00 mol) HDI mit Tropftrichter unter Rühren so zügig zugegeben, dass die Mischung bei ca 135 °C gehalten wurde. Nach beendeter Zugabe wurde

die Mischung weitere 5 Stunden bei 135 °C erhitzt. Die Mischung wurde abgekühlt, wobei das Polymer als großer Klumpen am Rührer hängend ausfiel. Ein kleiner Teil des Polymerklumpens wurde abgetrennt, mit Aceton gewaschen und getrocknet, um die GPC und NMR Messung durchzuführen. Im NMR Spektrum wurden 0,1 mol-% Allophanat gefunden. Die GPC ergab Mw: 137707 g/ mol; Mn: 23203 g/ mol; Mz: 295338 g/ mol.

Versuch 10: Thermostabilisierung von TPU Pulver (erfindungsgemäß)

Es wurden 950 mL Chlorbenzen, 47,5 mL DMSO, 191,71 g (2,13 mol) BDO, 2,72 g (21 mmol) n-Octanol sowie 180,3 g (1,07 mol) HDI in einem 2L Reaktionsgefäß mit Thermometer, Rückflußkühler und mechanischen Rührer bei 20 °C eingefüllt. Die Mischung wurde auf dem Ölbad langsam bis zum Rückfluß erwärmt und langsam weitere 180,32 g (1,07 mol) HDI mit Tropftrichter unter Rühren so zugegeben, dass die Mischung am Rückfluß sanft siedete. Nach beendeter Zugabe wurde die Mischung weitere 5 Stunden am Rückfluß erhitzt. Die Mischung wurde auf Raumtemperatur unter ständigem Rühren abgekühlt, wobei das Polymer als weißes Pulver ausfiel. Es wurde abfiltriert und der Rückstand auf der Nutsche 2 mal mit je 250 mL Chlorbenzen nachgewaschen. Danach wurde der Feststoff in einer Lösung aus 1,52 g Irgafos 168 und 1,52 g Irganox 245 in 250 mL Chlorbenzen 10 Minuten suspendiert und abfiltriert. Der feuchte Filterkuchen wurde zunächst bei Raumtemperatur 24 Stunden vorgetrocknet, dann 3 Stunden bei 50 °C und anschließend entsprechend der Zeiten in Tabelle 4 getrocknet.

Versuch 11: Vergleichsbeispiel nicht-thermostabilisiertes TPU Pulver (nicht erfindungsgemäß)

Der Versuch wurde analog Versuch 10 durchgeführt. Im letzten Waschschritt wurde jedoch kein Irgafos 168 oder Irganox 245 zugegeben (siehe Tabelle 4).

Versuch 12: Stabilisator während der Reaktion zugesetzt (nicht erfindungsgemäß)

Der Versuch wurde analog Versuch 10 durchgeführt, allerdings wurden Irgafos 168 und Irganox 245 gleich zu Anfang bei der Reaktion zugegeben und nicht im letzten Waschschritt (siehe Tabelle 4).

Versuch 13: Stabilisator trocken eingemischt (nicht erfindungsgemäß)

Es wurden 950 mL Chlorbenzen, 47,5 mL DMSO, 191,71 g (2,13 mol) BDO, 2,72 g (21 mmol) n-Octanol sowie 180,3 g (1,07 mol) HDI in einem 2L Reaktionsgefäß mit Thermometer, Rückflußkühler und mechanischen Rührer bei 20 °C eingefüllt. Die Mischung wurde auf dem Ölbad langsam bis zum Rückfluß erwärmt und langsam weitere 180,32 g (1,07 mol) HDI mit Tropftrichter unter Rühren so zugegeben, dass die Mischung am Rückfluß sanft siedete. Nach beendeter Zugabe wurde die Mischung weitere 5 Stunden am Rückfluß erhitzt. Die Mischung wurde auf Raumtemperatur unter ständigem Rühren abgekühlt, wobei das Polymer als weißes Pulver ausfiel. Es wurde abfiltriert und der Rückstand auf der Nutsche 2 mal mit je 250 mL Chlorbenzen nachgewaschen. Der feuchte Filterkuchen wurde zunächst bei Raumtemperatur und anschließend 3 Stunden bei 50 °C vorgetrocknet. Das weiße Polymerpulver wurde trocken mit gepulverten 1,52 g Irgafos 168 und 1,52 g Irganox 245 vermischt und anschließend entsprechend der Zeiten in Tabelle 4 getrocknet.

Versuch 14: Vergleichsbeispiel PA12 (nicht erfindungsgemäß)

Kommerziell erhältliches PA12 Pulver (Fa. Farsoon, FS3300PA) wurde 2 Stunden und 5 Stunden im Umluftofen bei 155 °C gelagert. Anschließend wurde der Gelbwert b der Proben und des unbehandelten neuen Materials gemessen. Die Ergebnisse sind in Tabelle 4 zusammengefasst.

Versuch 15: Vergleichsbeispiel PA12 mit Stabilisator (nicht erfindungsgemäß)

Zu 20 g gepulvertem PA12 (Fa. Farsoon, FS330PA) wurden 0,06 g Irganox 245 und 0,06 g Irgafos 168 zugegeben. Die Mischung wurde mit 150 mL Aceton versetzt und für 30 Minuten gerührt. Anschließend wurde das Lösungsmittel mittels Rotationsverdampfer bei 40 °C und ca. 150 mbar abgetrennt und danach das Pulver 2 Stunden bzw. 5 Stunden im Umluftofen bei 155 °C gelagert. Anschließend wurde der Gelbwert b der Proben und des unbehandelten neuen Materials gemessen. Die Ergebnisse sind in Tabelle 4 zusammengefasst.

**Tabelle 4**

| Versuch | Additiv E2 | Temperatur [°C] | Zeit [h] | L | a | b | Δb | Kommentar |
|---|---|---|---|---|---|---|---|---|
| | | | | | | | | |
| 11a | nein | 20 | 0 | 97,6 | -0,2 | 0,4 | 0,0 | Referenz |
| | | | | | | | | |
| 11b | nein | 80 | 96 | 97,4 | -0,2 | 0,6 | 0,2 | |
| 11c | nein | 100 | 96 | 97,5 | -0,5 | 1,8 | 1,4 | |
| 11d | nein | 120 | 96 | 96,5 | -0,6 | 5,6 | 5,2 | |
| | | | | | | | | |
| 10a | ja | 20 | 0 | 97,5 | -0,3 | 1,1 | 0,0 | Referenz |
| 10b | ja | 120 | 96 | 97,3 | -0,4 | 2,2 | 1,1 | Imprägniert |
| 10c | ja | 155 | 2 | 97,6 | -0,3 | 2,0 | 0,9 | Imprägniert |
| 10d | ja | 155 | 6 | 96,9 | -0,2 | 2,6 | 1,5 | Imprägniert |
| | | | | | | | | |
| 12a | ja | 20 | 0 | 98,2 | -0,3 | 1,1 | 0 | Referenz |
| 12b | ja | 155 | 2 | 97,4 | -0,7 | 4,4 | 3,3 | Bei Reaktion zugegeben |
| 12c | ja | 155 | 6 | 91,2 | -1,2 | 14 | 12,9 | Bei Reaktion zugegeben |
| | | | | | | | | |
| 13a | ja | 20 | 0 | 97,1 | 0 | 0,8 | 0 | Referenz |
| 13b | ja | 155 | 2 | 96,5 | -0,1 | 3,6 | 2,8 | Trocken gemischt |
| 13c | ja | 155 | 6 | 96,2 | 0 | 4,5 | 3,7 | Trocken gemischt |
| | | | | | | | | |
| PA12 | | | | | | | | |
| 14a | nein | 20 | 0 | 97,7 | -0,4 | 2,5 | 0 | Referenz |
| 14b | nein | 155 | 2 | 94,7 | 0,5 | 7,3 | 4,8 | |
| 14c | nein | 155 | 6 | 94,5 | 0,3 | 8,2 | 5,7 | |
| 15a | ja | 20 | 0 | 96,8 | 0,2 | 3,2 | 0 | Referenz |
| 15b | ja | 155 | 6 | 93,5 | 0,3 | 10 | 6,8 | Imprägniert |

Diskussion:

Die Patentnachstellungen Versuche 1a) (DE728981C) und 1b) (German Plastics Practise 1947, 289) unter Verwendung von Chlorbenzen bzw. einer Mischung aus Chlorbenzen/ o-Dichlorbenzen sowie die weiteren Versuche 7a) - 7f) mit Verwendung eines Lösungsmittels aus der Gruppe A1 ergaben thermoplastische Polyurethane, welche jedoch nicht die notwendige Molmasse Mw > 35000 g/ mol erreichten, um praktisch nutzbare mechanische Eigenschaften des Polymers zu zeigen. So waren Formkörper aus diesen Materialien sehr spröde. Dies wurde durch Austestung des Bruchverhaltens bestätigt (Versuch 1a und b). Zudem fielen die erhaltenen Polymere teilweise nicht als Pulver aus, sondern bildeten klebrige oder gelartige Klumpen (Versuch 7b) und 7d)), die sich nicht ohne weiteres aufarbeiten ließen und im industriellen Maßstab nicht produzierbar sind. Innerhalb der in dieser Gruppe A1 getesteten Lösungsmittel erwiesen sich Chlorbenzen, o-Dichlorbenzen, Butylacetat und Amylacetat als am besten geeignet, da die Polyurethane als weiße Pulver ausfielen, wobei die Polymere, welche in Chlorbenzen bzw Dichlorbenzen hergestellt wurden, in der Gruppe die höchste Molmasse zeigten.

Versuche, die Löslichkeit des Polyurethanes in diesen Lösungsmitteln mittels höherer Temperatur zu verbessern und so zu höheren Molmassen Mw und dem gewünschten erfindungsgemäßen Polyurethanpulvern zu gelangen (Versuche 6a) bis 6d)), schlugen fehl. Zwar konnte das Molgewicht geringfügig erhöht werden, aber zugleich führte die

Temperaturerhöhung ab 140 °C zu einer Zunahme des Allophanatgehaltes und damit zu Verzweigungen im Polymer. Bei 150 °C wurde der Allophanatgehalt so hoch, das zahlreiche Gelpartikel beobachtet wurden und bei 180 °C fiel das Polymer als einziger großer Klumpen aus.

Auch die alleinige Verwendung von Lösungsmitteln A2 führte nicht zu den erfindungsgemäßen Polyurethanpulvern. Sowohl Versuch 8) mit Propylencarbonat als auch Versuch 9) mit $\gamma$-Butyrolacton ergaben Polymere mit hohem Molekulargewicht Mw, die auch gute mechanische Eigenschaften erwarten ließen. Allerdings fiel das Polymer in beiden Fällen als ein großer Klumpen beim Erkalten aus, der vor allem im industriellen Maßstab nur schwer aufzuarbeiten ist und kein Pulver im Sinne der Erfindung darstellt.

Erst die Verwendung einer Kombination aus Lösungsmittel A1) und A2) ergab die gewünschten thermoplastischen Polyurethane als Pulver und mit dem für gute Dehnung und Zähigkeit sowie notwendigen Molekulargewicht von über 35000 g/ mol. Dabei wurde als Lösungsmittel A1) Chlorbenzen gewählt, da es einen Siedepunkt im gewünschten Temperaturbereich aufweist, wodurch die Wärmeabfuhr für die stark exotherme Urethanreaktion einfach und Druck-frei durch Siedekühlung realisierbar ist. Zudem weist Chlorbenzen eine hohe reaktive Beständigkeit und Verträglichkeit sowie Mischbarkeit mit den Lösungsmitteln A2) auf. Die Versuche 1c) - 1i) zeigen weitere Variationsmöglichkeiten für das Lösungsmittel A2), wobei insbesondere die Verwendung von DMSO sehr gute Ergebnisse erzielte. Zudem ist DMSO unter dem Gesichtspunkt der Gefahreneinstufungen (siehe Sicherheitsdatenblatt) gegenüber den anderen verwendeten Lösungsmitteln der Gruppe A2) zu bevorzugen.

In den Versuchen 2a) bis 2e) wurde das Verhältnis von Lösungsmittel A1) (Chlorbenzen) und Lösungsmittel A2) (DMSO) über einen größeren Bereich variiert. Dabei zeigte sich, dass das Polyurethan aus HDI und BDO immer als erfindungsgemäßes Pulver anfiel und das verschiedene Molgewichte Mw in Abhängigkeit von dem Mischungsverhältnis kontrolliert eingestellt werden konnten. Somit ist es möglich, Polymere mit verschiedenen Molmassen, d.h. mit unterschiedlichen Schmelzviskositäten, für die unterschiedlichsten Verarbeitungsverfahren gezielt herzustellen.

In den Versuchen 3), 4) und 5) sind Variationen des erfindungsgemäßen Verfahrens gezeigt, bei denen unterschiedliche Isocyanate und Polyole bzw. Kombinationen eingesetzt wurden und zeigen, dass mit dem Verfahren eine breite Palette an Polyurethanpulvern zugängig ist.

Wie bereits von J.M. DeBell (German Plastics Practice 1947, S. 304) beschrieben, haben die nach Fällungsverfahren hergestellten TPU Pulver die Neigung, bei erhöhter Temperatur leicht zu vergilben. Dies erforderte daher einen langwierigen Trocknungsprozess bei niedrigen Temperaturen und führte zudem zu einem größeren Gehalt an Restlösemitteln. Außerdem verhindert die Vergilbung zum Teil die Anwendung der Pulver bei Sinterverfahren, bei denen das Pulver längere Zeit hohen Temperaturen ausgesetzt ist.

Die Neigung zur Vergilbung konnte in den Versuchen 11b), 11c) und 11d) bestätigt werden. Insbesondere bei Temperaturen über 100 °C nimmt die Vergilbungsneigung stark zu. Auch eine Trocknung bzw. Lagerung im Vakuum (100 mbar) führte zu einer Vergilbung, vermutlich durch Oxidationsprozesse, da Spuren von Sauerstoff nicht gänzlich über längere Zeit ausgeschlossen werden können. Möglicherweise ist dafür die hohe Oberfläche der gefällten Pulver verantwortlich, da dieses Verhalten selbst bei viel höheren Temperaturen in der Schmelze nicht beobachtet wurde (O. Bayer Angew. Chem. 1947, 59, 9, 257-288). Ein Zusatz von bekannten Thermostabilisatoren (WO2022128170, WO2022128172) in situ während der Synthese des Polyurethanpulvers ergab keine wesentliche Verbesserung bei der Gelbfärbung (Versuche 12b) und 12c)). Eine deutliche Verbesserung konnte durch trockenes Blenden des TPU Pulvers mit den pulverisierten Thermostabilisatoren erzielt werden (Versuche 13b) und 13c)). Allerdings ist die Verbesserung noch nicht ausreichend, um eine spätere Anwendung in allen Verarbeitungsprozessen zu gewährleisten. Zudem löst ein trockenes Blenden nicht das Problem des langwierigen Trocknungsschrittes des TPU Pulvers. Erst die Zugabe der Thermostabilisatoren als Lösung im letzten Waschschritt führte zu einem TPU Pulver, welches auch längere Zeit bei höheren Temperaturen getrocknet und gelagert werden konnte (Versuche 10b) - 10d)). Der Wirkmechanismus ist dabei nicht völlig verstanden, zumal ein Vergleich zu PA 12 Pulver, welches ebenfalls zum Beispiel für Pulverbeschichtungsverfahren verwendet wird und zur Vergilbung neigt (Versuche 14a) - 14c)), nach einer ähnlichen Zugabe der Thermostabilisatoren keine Verbesserungen zeigte (Versuche 15)).

## Patentansprüche

**1.** Verfahren zur Herstellung eines thermoplastischen Polyurethan-Pulvers mittels Fällungspolymerisation, umfassend die Schritte:

i. Bereitstellung

A) eines Lösungsmittelgemisches, umfassend mindestens ein erstes aprotisches Lösungsmittel A1) mit einer relativen Permittivität $\varepsilon_r$ von 3 bis 20 und mindestens ein zweites aprotisch polares Lösungsmittel A2) mit einer relativen Permittivität $\varepsilon_r$ von wenigstens 24, wobei die relative Permittivität $\varepsilon_r$ jeweils bei 20 °C und

100 kHz gemessen wird;
B) wenigstens eines Polyols mit einer Molmasse zwischen 60 g/mol und 250 g/ mol;
C) wenigstens eines Diisocyanats;
D) optional eines Katalysators;
E) optional eines Kettenregulators E1) und/oder eines Additivs E2);

ii. Umsetzung des Polyols B) mit dem Diisocyanat C) in dem Lösungsmittelgemisch A) bei einer Temperatur von höchstens 150 °C, gegebenenfalls unter Anwesenheit des Katalysators D), des Kettenregulators E1) und/oder des Additivs E2), zu dem thermoplastischen Polyurethan, wobei das thermoplastische Polyurethan als Feststoff in dem Lösungsmittelgemisch A) ausfällt und eine Dispersion bildet;
iii. Abtrennung von dem Lösungsmittelgemisch und optionale Waschung des thermoplastischen Polyurethans mit einem Lösungsmittel; und
iv. Trocknung des thermoplastischen Polyurethans zu dem thermoplastischen Polyurethan-Pulver;
wobei das thermoplastische Polyurethan-Pulver

- ein Massenmittel der Molmasse Mw von > 35000 g/mol;
- einen Allophanatgehalt von < 0,25 mol-%, bezogen auf das gesamte thermoplastische Polyurethan-Pulver; und
- > 25,0 Gew.-% einer Partikelfraktion von < 0,500 mm, bezogen auf das gesamte thermoplastische Polyurethan-Pulver und/oder ein Verhältnis von Zentrifugenmittel der Molmasse Mz zu Massenmittel der Molmasse Mw von < 4,0;

aufweist, wobei das Massenmittel der Molmasse Mw, der Allophanatgehalt, die Partikelfraktion sowie das Zentrifugenmittel der Molmasse Mz jeweils mit den in der Beschreibung dargelegten Methoden bestimmt werden.

**2.** Verfahren nach Anspruch 1, **dadurch gekennzeichnet, dass** das erste aprotische Lösungsmittel A1) halogenierte Aromaten, Ketone, Ether, Ester und Carbonate oder Mischungen davon, insbesondere Chlorbenzol und/oder ortho-Dichlorbenzol; Cyclopentanon, Cyclohexanon; Heptan-4-on; Acetophenon oder Mischungen davon, bevorzugt Chlorbenzol und/oder das zweite aprotisch polare Lösungsmittel A2) Dimethylsulfoxid, Dimethylformamid, N-Methyl-2-pyrrolidon, Tetramethylharnstoff, 1,3-Dimethyl-3,4,5,6-tetrahydro-2(1H)-pyrimidinion, 1,3-Dimethyl-2-imidazolidinon, N-Ethyl-2-pyrrolidon, Benzonitril, Dimethylacetamid oder Mischungen davon, bevorzugt Dimethylsulfoxid umfasst oder daraus besteht.

**3.** Verfahren nach Anspruch 1 oder 2, **dadurch gekennzeichnet, dass** das Verhältnis von dem ersten aprotischen Lösungsmittel A1) zu dem zweiten aprotisch polaren Lösungsmittel A2) 300:1 bis 1:9 beträgt, bevorzugt 200:1 bis 1:1, weiter bevorzugt 100:1 bis 8:2.

**4.** Verfahren nach einem der vorstehenden Ansprüche, **dadurch gekennzeichnet, dass** das Polyol B) Ethylenglykol, 1,3-Propandiol, 1,4-Butandiol, 1,5-Pentandiol, Neopentylglycol, 1,6-Hexandiol, 1,8-Octandiol, 1,10-Decandiol, 1,12-Dodecandiol oder Mischungen davon umfasst oder daraus besteht, wobei das Polyol B) vorzugsweise mindestens 50,0 Gew.-% 1,4-Butandiol, besonders bevorzugt mindestens 90,0 Gew.-% 1,4-Butandiol enthält, bezogen auf das Gesamtgewicht des Polyols B) und/oder das Diisocyanat C) 1,4-Butandiisocyanat, 1,5-Pentandiisocyanat, 1,6-Hexandiisocyanat, Isophorondiisocyanat, 1,1'-Methylenbis(4-isocyanatocyclohexan), Xylylene-Diisocyanat, insbesondere m-Xylylene-Diisocyanat oder Mischungen von diesen umfasst oder daraus besteht, wobei das Diisocyanat C) vorzugsweise mindestens 50,0 Gew.-% 1,5-Pentandiisocyanat oder 1,6-Hexandiisocyanat enthält, bezogen auf das Gesamtgewicht des Diisocyanats C).

**5.** Verfahren nach einem der vorstehenden Ansprüche, **dadurch gekennzeichnet, dass** die Umsetzung in Schritt ii. bei einer Temperatur von 50 °C bis 150 °C, bevorzugt von 100 °C bis 145 °C, weiter bevorzugt von 120 °C bis 140 °C erfolgt und/oder bei einer Isocyanat-Kennzahl von 0,95 bis 1,1, bevorzugt 0,97 bis 1,02, weiter bevorzugt 0,98 bis 1,0 erfolgt.

**6.** Verfahren nach einem der vorstehenden Ansprüche, **dadurch gekennzeichnet, dass** die in Schritt ii. gebildete Dispersion einen Feststoffgehalt von 5,0 bis 50,0 Gew.-% aufweist, bevorzugt von 15,0 bis 45,0 Gew.-%, weiter bevorzugt von 20,0 bis 40,0 Gew.-%, bestimmt mittels gravimetrischer Messung mit und ohne Lösungsmittel.

**7.** Verfahren nach einem der vorstehenden Ansprüche, **dadurch gekennzeichnet, dass** das thermoplastische Polyurethan-Pulver

- ein Massenmittel der Molmasse Mw von 40000 bis 300000 g/mol, bevorzugt von 45000 bis 150000 g/mol, besonders bevorzugt von 55000 bis 100000 g/mol;
- einen Allophanatgehalt von 0 bis 0,20 mol-%, bevorzugt von 0,001 bis 0,15 mol-%, besonders bevorzugt von 0,01 bis 0,10 mol-%, bezogen auf das gesamte thermoplastischen Polyurethan-Pulver; und/oder
- von 30,0 bis 100,0 Gew.-%, weiter bevorzugt von 40,0 bis 80,0 Gew.-% einer Partikelfraktion von < 0,500 mm, bezogen auf das gesamte thermoplastischen Polyurethan-Pulver und/oder ein Verhältnis von Zentrifugenmittel der Molmasse Mz zu Massenmittel der Molmasse Mw von < 3,0, bevorzugt von 1,5 bis 2,2;

aufweist.

**8.** Verfahren nach einem der vorstehenden Ansprüche, **dadurch gekennzeichnet, dass** das thermoplastische Polyurethan nach Schritt iii. und/oder das thermoplastische Polyurethan-Pulver nach Schritt iv. mit einem Stabilisator aus einer Stabilisatorlösung imprägniert wird, wobei dafür das thermoplastische Polyurethan nach Schritt iii. und/oder das thermoplastische Polyurethan-Pulver nach Schritt iv. in der Stabilisatorlösung dispergiert und anschließend abgetrennt sowie getrocknet wird.

**9.** Verfahren nach Anspruch 8, **dadurch gekennzeichnet, dass** die Stabilisatorlösung

- ein Lösungsmittel, welches aus der Gruppe ausgewählt ist, umfassend oder bestehend aus Lösungsmitteln der Gruppe chlorierte Aromaten; Aliphaten; Ester; Ether; Alkohole; Wasser; Ketone; Nitrile; Carbonate; oder Mischungen davon, oder bevorzugt dem/den Lösungsmittel(n) A1) aus Schritt i., wobei das/die Lösungsmittel vorzugsweise einen Siedepunkt von < 250 °C bei 1 bar aufweisen; und
- einen darin gelösten Stabilisator, welcher aus der Gruppe ausgewählt ist, umfassend oder bestehend aus sterisch gehinderte Phenol-Derivate, organische Phosphin-, Phosphit- und/ oder Phosphonat-Derivate, schwefelhaltige Antioxidantien, 2,2,6,6-Tetramethylpiperidin-Derivate, Benzotriazol-Derivate, Triazin-Derivate, Hydroxybenzophenon-Derivate, Cyanoacrlyat-Derivate, Oxalinid-Derivate oder Mischungen davon;

umfasst oder daraus besteht, wobei der Gewichtsanteil des Stabilisators vorzugsweise von 0,001 bis 10,0 Gew.-%, weiter bevorzugt von 0,05 bis 5,0 Gew.-% beträgt, bezogen auf das Gesamtgewicht der Stabilisatorlösung.

**10.** Verfahren nach Anspruch 8 oder 9, **dadurch gekennzeichnet, dass** das thermoplastische Polyurethanpulver 0,005 bis 2,0 Gew.-% des Stabilisators aus der Stabilisatorlösung aufweist, bezogen auf das Gesamtgewicht des thermoplastischen Polyurethanpulvers.

**11.** Verfahren nach einem der Ansprüche 8 bis 10, **dadurch gekennzeichnet, dass** das thermoplastische Polyurethan-Pulver eine Änderung des b-Werts nach einer Temperatureinwirkung von 120 °C für eine Dauer von 96 h und/oder von 155 °C für eine Dauer von 6 h jeweils unter Luftatmosphäre von ≤ 3,5, bevorzugt von 0,1 bis 2,8, weiter bevorzugt von 0,2 bis 2,0 aufweist, wobei der b-Wert im CIE-Lab Farbraum mittels einem Spektralphotometer mit der Lichtart D 65 bei 8° gemäß DIN EN ISO 11664-4 bestimmt wird und sich die Änderung des b-Werts durch Subtraktion des b-Werts vor der Temperatureinwirkung von dem b-Wert nach der Temperatureinwirkung ergibt.

**12.** Thermoplastisches Polyurethan-Pulver, erhalten oder erhältlich nach einem Verfahren gemäß einem der Ansprüche 1 bis 11.

**13.** Verwendung eines thermoplastischen Polyurethan-Pulvers gemäß Anspruch 12 in einem Extrusionsverfahren, Spritzgussverfahren, Pulversinterverfahren, Lösungsmittel- und/oder Schmelzeverfahren, insbesondere zur Herstellung von Formteilen und/oder Beschichtungen.

**14.** Formteil, erhalten oder erhältlich durch die Verarbeitung eines thermoplastischen Polyurethan-Pulvers gemäß Anspruch 12.

**15.** Formteil nach Anspruch 14, **dadurch gekennzeichnet, dass** das Formteil frei von Gelpartikeln ist, wobei "frei von Gelpartikeln" wie in der Beschreibung dargelegt definiert und bestimmt wird.

Europäisches Patentamt
European Patent Office
Office européen des brevets

# EUROPÄISCHER RECHERCHENBERICHT

Nummer der Anmeldung
EP 23 17 1532

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 728 981 C (IG FARBENINDUSTRIE AG) 7. Dezember 1942 (1942-12-07) * Beispiel 16 * ----- | 1-15 | INV. C08G18/28 C08G18/32 C08G18/73 B29C64/00 |
| A,D | BAYER O: "DAS DI-ISOCYANAT-POLYADDITIONSVERFAHREN (POLYURETHANE)", ANGEWANDTE CHEMIE, WILEY - V C H VERLAG GMBH & CO. KGAA, DE, Bd. 59A, Nr. 9, September 1947 (1947-09), Seiten 257-288, XP009024616, ISSN: 0044-8249, DOI: 10.1002/ANGE.19470590901 * Seite 258, rechte Spalte, letzter Absatz * ----- | 1-15 | |
| A | WO 2021/122429 A1 (COVESTRO INTELLECTUAL PROPERTY GMBH & CO KG [DE]) 24. Juni 2021 (2021-06-24) * Vergleichsbeispiel 13; Beispiele 2,11 * ----- | 1-15 | |
| | | | RECHERCHIERTE SACHGEBIETE (IPC) |
| A | WO 2021/122304 A1 (COVESTRO INTELLECTUAL PROPERTY GMBH & CO KG [DE]) 24. Juni 2021 (2021-06-24) * Beispiele 1,2 * ----- | 1-15 | C08G B29C |

Der vorliegende Recherchenbericht wurde für alle Patentansprüche erstellt

1

| Recherchenort | Abschlußdatum der Recherche | Prüfer |
|---|---|---|
| München | 27. September 2023 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 23 17 1532

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2023

| Im Recherchenbericht angeführtes Patentdokument | Datum der Veröffentlichung | Mitglied(er) der Patentfamilie | Datum der Veröffentlichung |
|---|---|---|---|
| DE 728981 C | 07-12-1942 | KEINE | |
| WO 2021122429 A1 | 24-06-2021 | CN 114787227 A | 22-07-2022 |
| | | EP 4077456 A1 | 26-10-2022 |
| | | JP 2023506508 A | 16-02-2023 |
| | | KR 20220117228 A | 23-08-2022 |
| | | US 2022411569 A1 | 29-12-2022 |
| | | WO 2021122429 A1 | 24-06-2021 |
| WO 2021122304 A1 | 24-06-2021 | CN 114761456 A | 15-07-2022 |
| | | EP 3838961 A1 | 23-06-2021 |
| | | EP 4077450 A1 | 26-10-2022 |
| | | TW 202136349 A | 01-10-2021 |
| | | US 2022403088 A1 | 22-12-2022 |
| | | WO 2021122304 A1 | 24-06-2021 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 728981 C
- WO 2021122279 A
- EP 3491066 A1
- EP 3512687 B1
- EP 0911142 B1
- WO 2022128170 A
- WO 2022128172 A


### In der Beschreibung aufgeführte Nicht-Patentliteratur


- **O. BAYER.** *Angew. Chem.,* 1947, vol. 59 (9), 257-288
- *CHEMICAL ABSTRACTS,* 31570-04-4
- *CHEMICAL ABSTRACTS,* 237-249-1
- *CHEMICAL ABSTRACTS,* 26741-53-7
- *CHEMICAL ABSTRACTS,* 603-35-0
- *CHEMICAL ABSTRACTS,* 80693-00-1
- *CHEMICAL ABSTRACTS,* 126050-54-2
- *CHEMICAL ABSTRACTS,* 6683-19-8
- *CHEMICAL ABSTRACTS,* 85-60-9
- *CHEMICAL ABSTRACTS,* 23128-74
- *CHEMICAL ABSTRACTS,* 36443-68-2
- *CHEMICAL ABSTRACTS,* 123-28-4
- *CHEMICAL ABSTRACTS,* 693-36-7
- *CHEMICAL ABSTRACTS,* 10595-72-9
- *CHEMICAL ABSTRACTS,* 29598-76-3
- *CHEMICAL ABSTRACTS,* 41484-35-9
- *CHEMICAL ABSTRACTS,* 16545-54-3
- *CHEMICAL ABSTRACTS,* 2500-88-1
- *CHEMICAL ABSTRACTS,* 96-69-5
- *CHEMICAL ABSTRACTS,* 90-66-4
- *German Plastics Practice,* 1946, 304
- DK Handbook. Endress+Hauser Messtechnik GmbH&Co, 1999
- **HUNGER et al.** *J. Chem. Eng.,* 2010, vol. 55 (5), 2055-2065
- **GRANZHAN et al.** *Zh. Prikl. Khim.,* 1970, vol. 43, 1875-1877
- **MOUMOUZIAS et al.** *Chem. Eng.,* 1999, vol. 44 (6), 1273-1278
- **BARTHEL et al.** *J. Chem. Eng.,* 2000, vol. 45 (6), 1007-1011
- Data from NIST Standard Reference Database 69. NIST Chemistry WebBook
- Static Dielectric Constants of Pure Liquids and Binary Liquid Mixtures (Supplement to IV/6). *Physical Chemistry,* vol. 17
- *German Plastics Practise,* 1947, 289
- **J.M. DEBELL.** *German Plastics Practice,* 1947, 304